# EUROPEAN PATENT APPLICATION

(11) **EP 3 930 302 A1**
(43) Date of publication of application: **29.12.2021**
(21) Application number: 20758674.4
(22) Date of filing: 13.02.2020
(51) Int. Cl.: H04N 5/232, H04N 5/92, H04N 21/218, H04N 21/242

(54) **DATA TRANSMISSION SYSTEM, DATA TRANSMISSION METHOD AND COMPUTER PROGRAM**

(30) Priority: 21.02.2019 JP 2019029512
(71) Applicant: Sony Group Corporation, Tokyo 108-0075 (JP)
(72) Inventor: KANMA, Hiroshi, Tokyo 108-0075 (JP); UEDA, Tatsuya, Tokyo 108-0075 (JP)
(74) Representative: D Young & Co LLP
(86) International application number: PCT/JP2020/005547
(87) International publication number: WO 2020/170931

(57) **Abstract**

There is provided a data transmission system including a plurality of image capturing devices, a plurality of control devices each configured to control a different one of the image capturing devices, and an information processing device configured to communicate with the control devices, in which, on the basis of a predetermined rule, the information processing device obtains, from the control devices, image captured by the image capturing devices at a timing in accordance with the rule.

## Description

### TECHNICAL FIELD

The present disclosure relates to a data transmission system, a data transmission method, and a computer program.

### BACKGROUND ART

Point of view (POV) cameras refer to digital cameras which are typically small in size and capture a scene from a real human viewpoint. The POV cameras can also be referred to as action cameras. Conventionally, the POV cameras have small image sensors and limited networking capabilities. Due to the small image sensors and the limited networking capabilities, the POV cameras deliver low quality images.

### SUMMARY OF THE INVENTION

### PROBLEMS TO BE SOLVED BY THE INVENTION

The present disclosure proposes a data transmission system, a method, and a program for controlling and operating a plurality of cameras that delivers images (e.g., a plurality of POV cameras) using an external device. In particular, the data transmission system according to the present disclosure includes a plurality of cameras and a plurality of camera control boxes, and each camera control box corresponds to one of the plurality of cameras.

The above data transmission system delivers image quality and special effects (e.g., bullet time, virtual reality content, etc.) that exceed image quality and special effects of individual cameras by synchronizing the plurality of cameras with a plurality of camera control devices that performs synchronized image capture.

The present disclosure also proposes a data transmission system, a data transmission method, and a computer program for transferring images captured by the above data transmission system to an external device on the basis of instructions from the external device.

### SOLUTIONS TO PROBLEMS

According to the present disclosure, there is provided a data transmission system including a plurality of image capturing devices, a plurality of control devices each configured to control a different one of the image capturing devices, and an information processing device configured to communicate with the control devices, in which, on the basis of a predetermined rule, the information processing device obtains, from the control devices, content obtained by the image capturing devices at a timing in accordance with the rule.

Further, according to the present disclosure, there is provided a data transmission method in a data transmission system including a plurality of image capturing devices, a plurality of control devices each configured to control a different one of the image capturing devices, and an information processing device configured to communicate with the control devices, the method including causing the information processing device to obtain, on the basis of a predetermined rule, content obtained by the image capturing devices at a timing in accordance with the rule, from the control devices.

### BRIEF DESCRIPTION OF DRAWINGS

Fig. 1 is an explanation diagram illustrating a schematic configuration of a multicamera system according to an embodiment of the present disclosure.
Fig. 2 is an explanation diagram illustrating details of individual devices included in the multicamera system.
Fig. 3 is an explanation diagram illustrating a functional configuration example of a camera control device according to the embodiment.
Fig. 4A is a flowchart illustrating an operation example of the multicamera system according to the embodiment.
Fig. 4B is a flowchart illustrating an operation example of the multicamera system according to the embodiment.
Fig. 4C is a flowchart illustrating an operation example of the multicamera system according to the embodiment.
Fig. 4D is a flowchart illustrating an operation example of the multicamera system according to the embodiment.
Fig. 4E is a flowchart illustrating an operation example of the multicamera system according to the embodiment.
Fig. 4F is a flowchart illustrating an operation example of the multicamera system according to the embodiment.
Fig. 5 is an explanation diagram illustrating an example of a graphical user interface which is displayed on a screen of an external device.
Fig. 6 is an explanation diagram illustrating an example of a graphical user interface which is displayed on a screen of an external device.
Fig. 7A is a flowchart illustrating an operation example of the multicamera system according to the embodiment.
Fig. 7B is a flowchart illustrating an operation example of the multicamera system according to the embodiment.
Fig. 7C is a flowchart illustrating an operation example of the multicamera system according to the embodiment.
Fig. 7D is a flowchart illustrating an operation example of the multicamera system according to the embodiment.
Fig. 7E is a flowchart illustrating an operation example of the multicamera system according to the embodiment.
Fig. 8 is an explanation diagram illustrating an example of a graphical user interface which is displayed on a screen of an external device.
Fig. 9 is an explanation diagram illustrating an example of a graphical user interface which is displayed on a screen of an external device.
Fig. 10 is an explanation diagram illustrating an example of a graphical user interface which is displayed on a screen of an external device.
Fig. 11 is an explanation diagram illustrating an example of a graphical user interface which is displayed on a screen of an external device.
Fig. 12 is an explanation diagram illustrating an example of a graphical user interface which is displayed on a screen of an external device.
Fig. 13 is an explanation diagram illustrating an example of a graphical user interface which is displayed on a screen of an external device.
Fig. 14 is an explanation diagram illustrating an example of a graphical user interface which is displayed on a screen of an external device.
Fig. 15 is an explanation diagram illustrating an example of a graphical user interface which is displayed on a screen of an external device.
Fig. 16 is a view schematically illustrating a general configuration of an operating room system.
Fig. 17 is a view illustrating an example of display of an operation screen image of a centralized operation panel.
Fig. 18 is a view illustrating an example of a state of surgery to which the operating room system is applied.
Fig. 19 is a block diagram illustrating an example of a functional configuration of a camera head and a camera control unit (CCU) illustrated in Fig. 18.

### MODE FOR CARRYING OUT THE INVENTION

Hereinafter, preferred embodiments of the present disclosure will be described in detail with reference to the appended drawings. Note that, in the present specification and the drawings, structural elements that have substantially the same functional configuration are denoted with the same reference numerals, and repeated explanation of these structural elements is omitted.

Note that descriptions will be provided in the following order.
1. An Embodiment of Present Disclosure
   1.1. System Configuration Example
   1.2. Device Configuration Example
   1.3. Operation Example
2. Application Example
3. Summary

### <1. An Embodiment of Present Disclosure>

### [1.1. System Configuration Example]

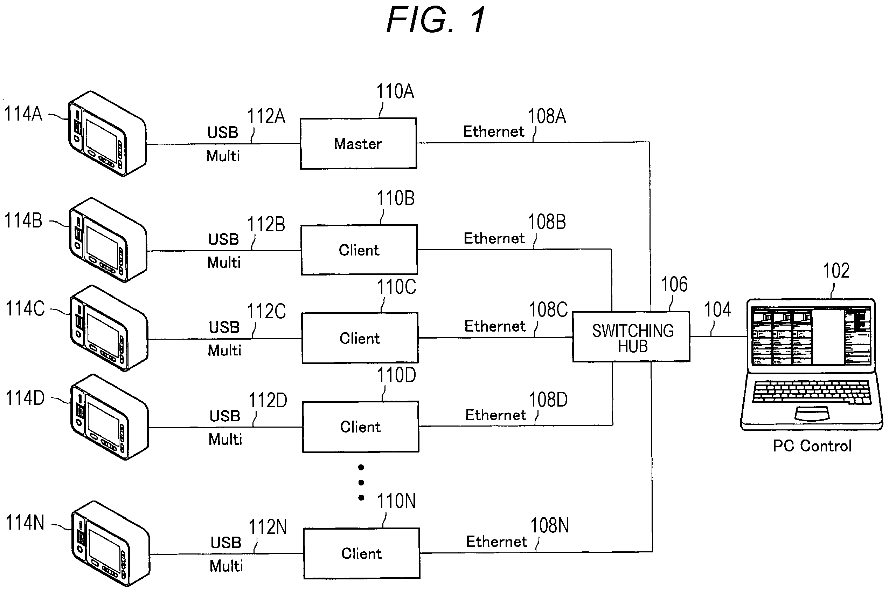

Initially, a description will be provided of a schematic configuration of a multicamera system, which is an example of a data transmission system of the present disclosure, according to an embodiment of the present disclosure, with reference to Fig. 1.

A multicamera system according to the embodiment of the present disclosure includes a plurality of cameras that is communicatively connected to an external device (e.g., a personal computer) via a plurality of camera control devices. There is a one-to-one correspondence between the plurality of cameras and the plurality of camera control devices. In other words, a single camera control device is provided for a single camera.

Each camera control device controls the conversion between control signals and Internet protocol (IP) signals. The plurality of cameras can be controlled from a single external device by being interfaced with the plurality of camera control devices. Moreover, the multicamera system synchronizes a timecode and a frame timing between the respective cameras of the plurality of cameras by the plurality of cameras being interfaced with the plurality of camera control devices. By synchronizing the timecode and the frame timing, the multicamera system brings about special effects that would not be possible without synchronization (e.g., bullet time, virtual reality (VR), three-dimensional (3D) imaging, or other appropriate special effects). Moreover, by interfacing the plurality of cameras with the plurality of camera control devices, the multicamera system provides a method of transferring a live view, an image, a video, and other appropriate data from each of the plurality of cameras to the external device.

Fig. 1 is an explanation diagram illustrating a configuration example of a multicamera system 100 according to the embodiment of the present disclosure. As illustrated in Fig. 1, the multicamera system 100 according to the embodiment of the present disclosure includes an external device 102, a switching hub 106, a plurality of camera control devices 110A to 110N, and a plurality of cameras 114A to 114N. The external device 102 and the switching hub 106 are connected by an Ethernet (registered trademark) connection 104. The switching hub 106 and the plurality of camera control devices 110A to 110N are connected by a plurality of Ethernet (registered trademark) connections 108A to 108N, respectively. The plurality of camera control devices 110A to 110N and the plurality of cameras 114A to 114N are connected by a plurality of USB multi-interface cables 112A to 112N, respectively.

The external device 102, which is an example of an information processing device of the present disclosure, includes an electronic processor, a memory, and an input/output (I/O) interface (not illustrated). The external device 102 can be, for example, a desktop or notebook personal computer including such devices. The electronic processor, the memory, and the input/output interface communicate via one or a plurality of communication buses (not illustrated). The external device 102 can include additional or different components and can be configured to perform functions in addition to the functions described herein.

The memory of the external device 102 can include a program storage area (e.g., read-only memory (ROM)), a data storage area (e.g., random access memory (RAM), and other non-transitory computer readable media). For example, the data storage area of the memory can store information regarding images to be generated and retrieved (e.g., a lookup table or other suitable formats), as a part of the multicamera system 100.

The electronic processor of the external device 102 (e.g., microprocessor or other suitable processing units) is coupled to the memory and executes machine-readable commands stored in the memory. For example, the commands stored in the memory can cause the external device 102 to communicate with and/or control the plurality of camera control devices 110A to 110N when executed by the electronic processor, as will be described in the present specification. Further, the commands stored in the memory of the external device 102 can cause the external device 102 to perform various operations as will be described in the present specification, when executed by the electronic processor of the external device 102.

Each of the plurality of camera control devices 110A to 110N includes an electronic processor, a memory, and an input/output (I/O) interface similar to the electronic processor, memory, I/O interface, and one or more communication buses, as described above for the external device 102.

One of the plurality of camera control devices 110A to 110N serves as a master camera control device. The camera control device 110A is specified as the master camera control device. The rest of the camera control devices then serve as client camera control devices.

For example, when commands stored in the memory of the master camera control device 110A are executed by the electronic processor of the master camera control device 110A, communication and/or control are (is) performed between the master camera control device 110A and the client camera control devices 110B to 110N.

Further, commands stored in the memory of the client camera control devices 110B to 110N can cause the client camera control devices 110B to 110N to perform various camera controls when executed by the electronic processor of the respective client camera control devices 110B to 110N.

Each of the plurality of cameras 114A to 114N includes an electronic processor, a memory, and an input/output (I/O) interface similar to the electronic processor, memory, I/O interface, and one or more communication buses, as described above for the external device 102 and the plurality of camera control devices 110A to 110N.

Commands stored in the memory of each of the plurality of cameras 114A to 114N can cause, for example, the corresponding one of the plurality of cameras 114A to 114N to perform various camera operations as will be described in the present specification when executed by the electronic processor of the respective cameras 114A to 114N.

The external device 102 is communicably connected to the switching hub 106 via the Ethernet (registered trademark) connection 104 as illustrated in Fig. 1. In another example, the connection between the external device 102 and the switching hub 106 may be a wireless communication connection.

The switching hub 106 is communicably connected to the plurality of camera control devices 110A to 110N via the plurality of Ethernet (registered trademark) connections 108A to 108N (e.g., Ethernet (registered trademark) communication with a local area network (LAN) cable). The external device 102 and each of the plurality of camera control devices 110A to 110N may be assigned a specific Internet protocol (IP) address by the switching hub 106. The external device 102 and the plurality of camera control devices 110A to 110N may communicate using IP signals. The plurality of camera control devices 110A to 110N is communicably connected to the plurality of cameras 114A to 114N, respectively, via the plurality of USB multi-interface cables 112A to 112N.

The plurality of camera control devices 110A to 110N includes the master camera control device 110A having a built-in server. In some examples, the master camera control device 110A is the first one of the plurality of camera control devices 110A to 110N that is communicably connected to the external device 102 via the switching hub 106. In another example, the external device 102 specifies a "master" state for any one of the plurality of camera control devices 110A to 110N. For example, the external device 102 can change the "master" state of the camera control device 110A to "client" and set the camera control device 110B to the "master" state. In some additional or alternative examples, each of the plurality of camera control devices may include a toggle switch or other suitable switches, and in some examples, the specifying of the "master" state may be based on a user input received by the external device 102. The "master" state may be specified on the basis of the position of the toggle switch or other appropriate switches in each of the plurality of camera control devices.

The external device 102 accesses the master camera control device 110A via an embedded server. In response to receiving an instruction from the external device 102, the master camera control device 110A sends data to the external device 102. Further, the master camera control device 110A sends an instruction as IP signals via the switching hub 106 to the other camera control devices 110B to 110N (also referred to as "client devices"), and receives data as IP signals from the client devices. In some examples, the master camera control device 110A sets up synchronized imaging of the plurality of cameras 114A to 114N. In another example, the master camera control device 110A performs a file transfer from the plurality of cameras 114A to 114N to the external device 102 on the basis of a user input to the external device 102.

The external device 102 has a web browser that provides the user with a graphical user interface that accesses the embedded server of the master camera control device 110A and controls the plurality of cameras 114A to 114N via the plurality of camera control devices 110A to 110N.

Each of the plurality of cameras 114A to 114N is individually connected to the plurality of camera control devices 110A to 110N, respectively, via the USB multi-interface cables (also referred to as UM cables). Each of the plurality of camera control devices 110A to 110N sends control signals to the corresponding one of the plurality of cameras 114A to 114N via the UM cables. In some examples, the control signals can include a power on/off signal, an image capture signal, an update system information signal, and a camera-setting-change signal (e.g., a signal for changing image resolution, frame rate, ISO setting, or other appropriate camera settings). In some examples, each of the plurality of cameras 114A to 114N sends data to the corresponding one of the plurality of camera control devices 110A to 110N via the UM cables. Examples of the data can include live view image data, a file, file path directory information, and other appropriate data. In addition, each of the plurality of cameras 114A to 114N receives power via the UM cables in some examples.

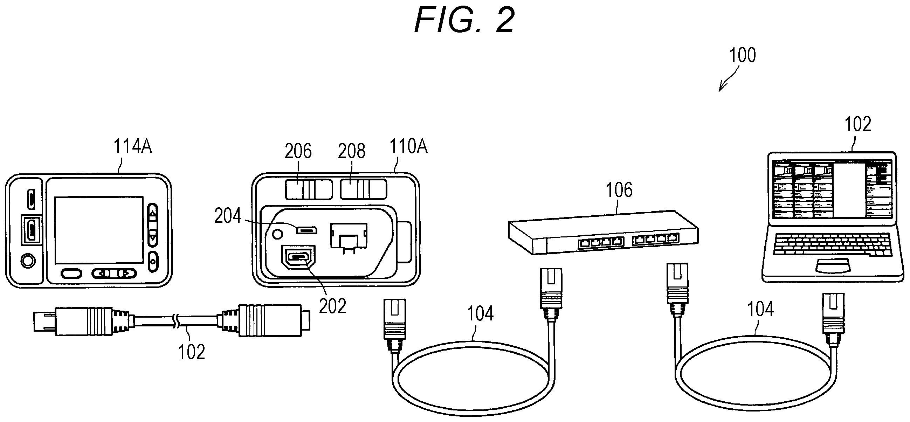

The configuration example of the multicamera system 100 according to the embodiment of the present disclosure has been described above with reference to Fig. 1. Subsequently, a detailed description will be provided of each device included in the multicamera system 100 with reference to Fig. 2.

Fig. 2 is a diagram illustrating details of individual devices included in the multicamera system 100 in Fig. 1. Fig. 2 illustrates the external device 102, the Ethernet (registered trademark) connection 104, the switching hub 106, the Ethernet (registered trademark) connection 108A, the camera control device 110A, the USB multi-interface cable 112A, and the camera 114A.

In the example of Fig. 2, the USB multi-interface cable 112A is a male UM-UM cable that connects the camera 114A to the camera control device 110A with a port 202. In some examples, a micro USB charging cable (not illustrated) is connected to a port 204 of the camera control device 110A for receiving power supply from a power source. In the example of Fig. 2, the Ethernet (registered trademark) connection 108A is a LAN cable, which is connected between the camera control device 110A and the switching hub 106. Similarly, the Ethernet (registered trademark) connection 104 is another LAN cable, which is connected between the switching hub 106 and the external device 102 (e.g., a personal computer). In some examples, the camera control device 110A can also include an indicator that indicates a power connection and/or a connection state with the camera 114A (e.g., LED indicator). In addition, the camera control device 110A can also include a master/client switch 206 for specifying the camera control device 110A as the master camera control device 110A for the multicamera system 100. In some examples, the camera control device 110A can also include a power switch 208.

In the multicamera system 100, only a single camera control device operates as the master, and the other camera control devices operate as the clients. Thus, there is only a single camera control device with the master/client switch 206 thrown to the master side. Here, in a case where there are two or more camera control devices with the master/client switch 206 thrown to the master side, one camera control device may be recognized as the master, and the indicator may be lit for the other camera control device (one with the master/client switch 206 thrown to the master side). Alternatively, in a case where there is no camera control device with the master/client switch 206 thrown to the master side, the indicators of all the camera control devices may be made to flash.

As illustrated in Fig. 2, the camera control device 110A may have a size similar to that of the camera 114A (e.g., a size similar to that of a POV camera). In another example, the size of the camera 114A may however be different from the size of the camera control device 110A. Examples of such a case include a case where the camera 114A is a professional cinema camera, a studio camera, a surveillance camera, or other suitable cameras.

The details of each device included in the multicamera system 100 have been described above with reference to Fig. 2. Subsequently, an example of the functional configuration of the camera control device according to the embodiment of the present disclosure will be described.

### [1.2. Device Configuration Example]

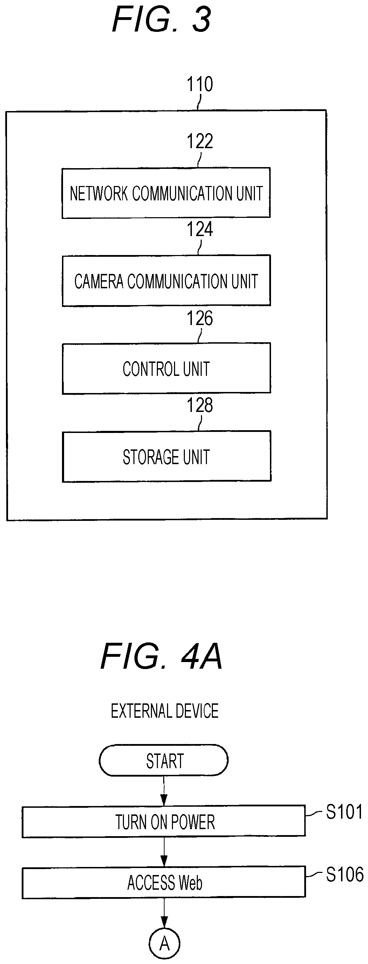

Fig. 3 is an explanation diagram illustrating a functional configuration example of a camera control device according to the embodiment of the present disclosure. An example of the functional configuration of the camera control device according to the embodiment of the present disclosure will be described below with reference to Fig. 3. In Fig. 3, the camera control devices 110A to 110N are collectively referred to as a camera control device 110. Further, the cameras 114A to 114N are collectively referred to as a camera 114.

As illustrated in Fig. 3, the camera control device 110 according to the embodiment of the present disclosure includes a network communication unit 122, a camera communication unit 124, a control unit 126, and a storage unit 128.

The network communication unit 122 performs communication with the switching hub 106 under the control of the control unit 126. The communication between the camera control device 110 and the switching hub 106 is, for example, an Ethernet communication.

The camera communication unit 124 performs communication with the camera 114 under the control of the control unit 126. The communication between the camera control device 110 and the camera 114 is, for example, communication using a USB multi-interface cable.

The control unit 126 controls the operation of the camera control device 110. The control unit 126 may be, for example, a CPU or other processors. The storage unit 128 stores a program that is executed by the control unit 126, settings, such as a table and parameters referenced by the control unit 126, data obtained from the camera 114, and the like.

The control unit 126 performs a process of synchronizing time with the other client camera control devices in a case where the camera control device 110 including the control unit 126 is the master camera control device. Further, the control unit 126 performs the process of synchronizing time with the master camera control device in a case where the camera control device 110 including the control unit 126 is a client camera control device. Details of the time synchronization process will be described later.

The camera control device 110 according to the embodiment of the present disclosure has a web server function. Thus, the control unit 126 performs the process for operating as a web server. Note that it is assumed that the IP address of the respective camera control devices 110 is specified when the multicamera system 100 is established. Thus, by specifying the IP address of the camera control device 110 to be accessed, the external device 102 can access the web server of the camera control device 110.

Further, in some cases, the control unit 126 obtains a file obtainment instruction from the external device 102 in a case where the camera control device 110 including the control unit 126 is the master camera control device. In that case, the control unit 126 sends a list of images (file list) captured by the camera 114 that is connected to the camera control device 110 including the control unit 126, to the external device 102. In addition, the control unit 126 instructs the client camera control device to send the file list to the external device 102. The client camera control device sends the file list to the external device 102 on the basis of this instruction.

The example of the functional configuration of the camera control device 110 according to the embodiment of the present disclosure has been described above. Subsequently, an operation example of the multicamera system 100 according to the embodiment of the present disclosure will be described.

### [1.3. Operation Example]

### (Time Synchronization Process)

Initially, an example of a process of synchronizing time in the plurality of camera control devices 110 will be described as an operation example of the multicamera system 100 according to the embodiment of the present disclosure.

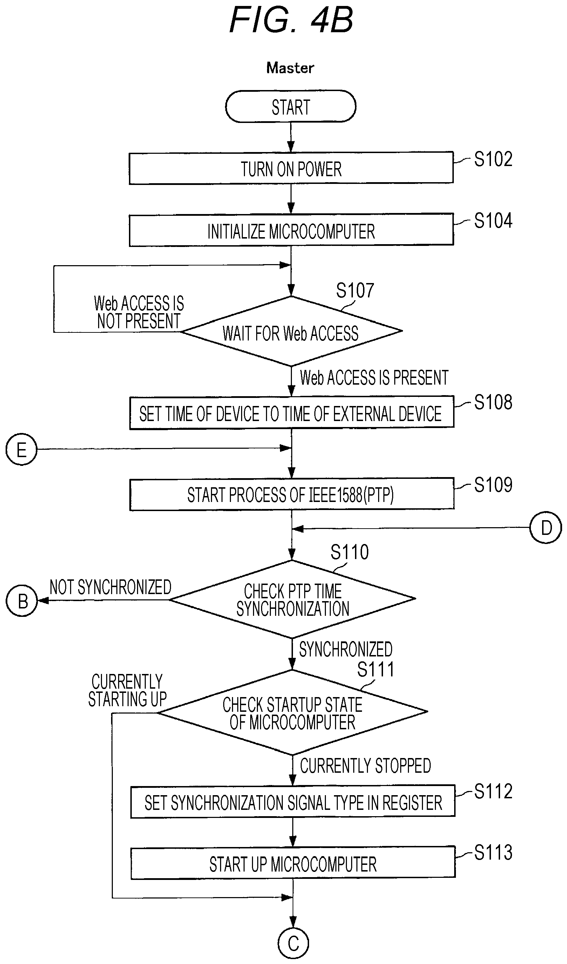

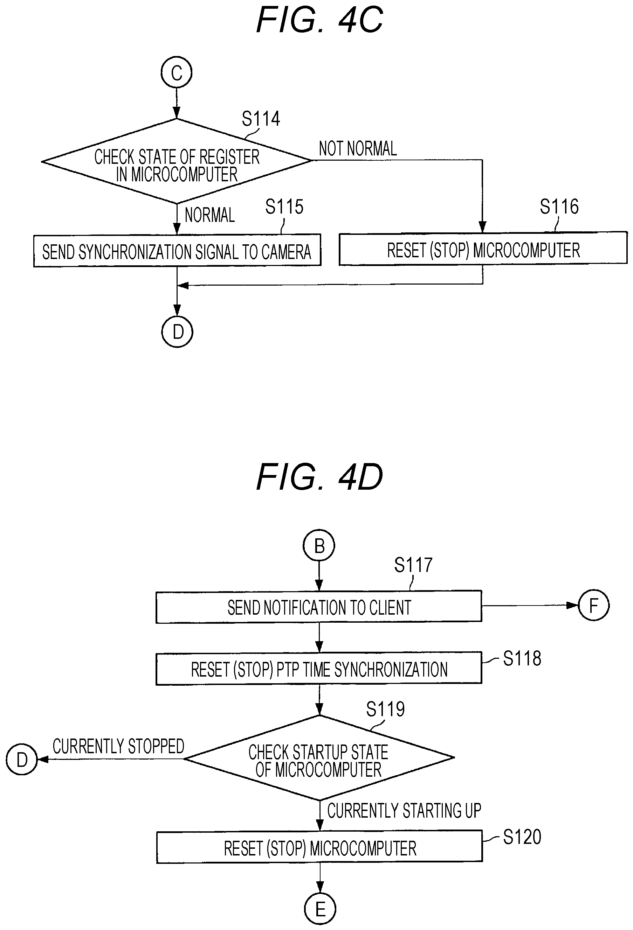

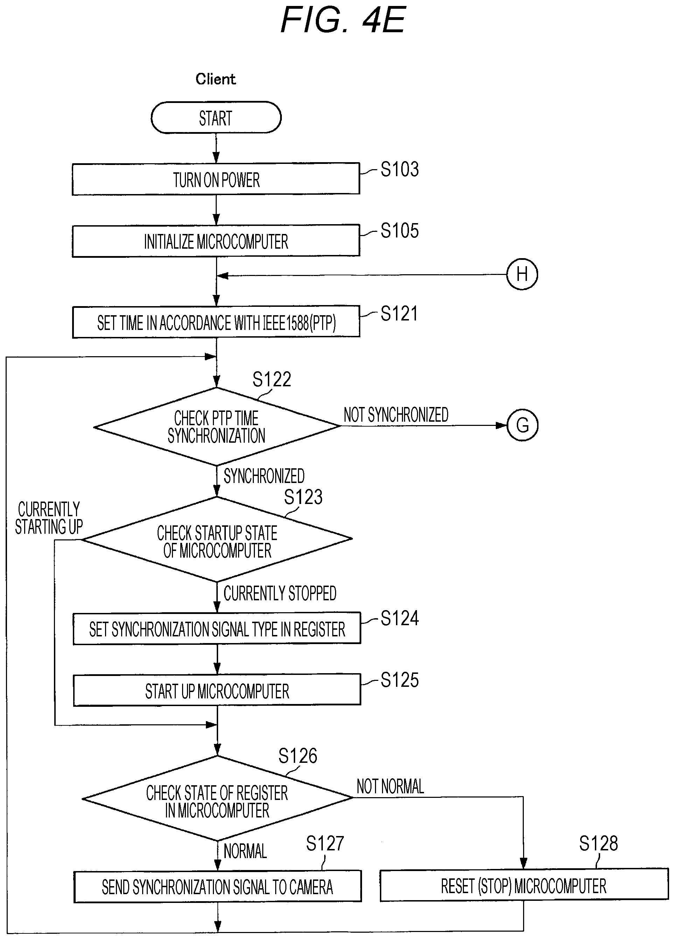

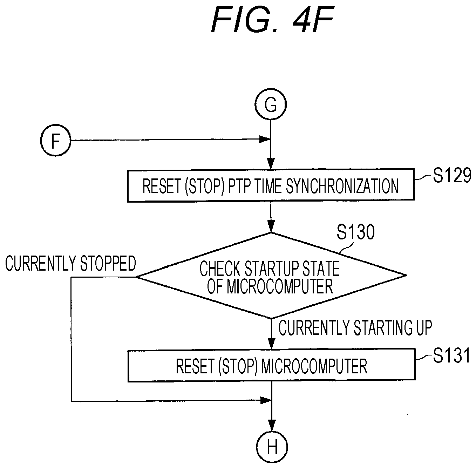

Figs. 4A to 4F are flowcharts each illustrating an operation example of the multicamera system 100 according to the embodiment of the present disclosure. Those illustrated in Figs. 4A to 4F are each an example of the process of synchronizing time in the plurality of camera control devices 110. An operation example of the multicamera system 100 according to the embodiment of the present disclosure will be described below with reference to Figs. 4A to 4F. Further, in the following descriptions, the master camera control device is referred to as the master camera control device 110A and the client camera control device as the client camera control device 110B.

Initially, when the powers of the external device 102, the master camera control device 110A, and the client camera control device 110B are each turned on (steps S101, S102, and S103), the master camera control device 110A and the client camera control device 110B initialize the respective microcomputers (steps S104 and S105).

After the power is turned on, the external device 102 uses a web browser to specify the IP address of the master camera control device 110A, and accesses the web server of the master camera control device 110A (step S106).

After the initialization of the microcomputer is completed, the master camera control device 110A stands by for access to the web server from the external device 102 (step S107). If there is access to the web server from the external device 102, the master camera control device 110A performs a process of setting the time of the master camera control device 110A to the time of the external device 102 (step S108).

After the master camera control device 110A sets the time of the master camera control device 110A to the time of the external device 102, subsequently, the master camera control device 110A performs the process of synchronizing time with the client camera control device 110B using a time synchronization protocol. In the present embodiment, the master camera control device 110A performs the time synchronization process using IEEE1588 (the precision time protocol (PTP)) which is a time synchronization protocol using Ethernet (registered trademark) (step S109). This time synchronization process is performed by, for example, the control unit 126. IEEE 1588 is a technology by which highly accurate time information can be accurately transferred from a master clock to a client clock via an asynchronous packet network.

After the master camera control device 110A starts the time synchronization process, the master camera control device 110A checks the synchronization of time with the client camera control device 110B using PTP (step S110). If time is synchronized with the client camera control device 110B through the time synchronization process, the master camera control device 110A checks the startup state of the microcomputer (step S111). This check process is performed by, for example, the control unit 126. The microcomputer for which the startup state is to be checked here can be a microcomputer for controlling the camera 114A.

If a result of the determination in step S111 indicates that the microcomputer is currently stopped, the master camera control device 110A sets a synchronization signal type in a register (step S112), and starts up the microcomputer (step S113). If the result of the determination in step S111 indicates that the microcomputer is currently starting up, the master camera control device 110A skips the processes in steps S112 and S113.

Subsequently, the master camera control device 110A checks the state of the register of the microcomputer (step S114). This check process is performed by, for example, the control unit 126. If the state of the register is normal, the master camera control device 110A sends a synchronization signal to the camera 114A (step S115). After sending the synchronization signal to the camera 114A, the master camera control device 110A returns the procedure to the process of checking the synchronization of time with the client camera control device 110B using PTP in step S110. By contrast, if the state of the register is not normal, the master camera control device 110A resets (or stops) the microcomputer (step S116). After the resetting of (or stopping) the microcomputer, the master camera control device 110A returns the procedure to the process of checking the synchronization of time with the client camera control device 110B using PTP in step S110.

If a result of the check in step S110 indicates that time is not synchronized with the client camera control device 110B, the master camera control device 110A sends a notification for synchronization of time to the client camera control device 110B (step S117). After sending the notification to the client camera control device 110B, the master camera control device 110A then stops the time synchronization process using PTP (step S118). The master camera control device 110A then checks the startup state of the microcomputer (step S119). If the microcomputer is currently starting up, the master camera control device 110A resets (or stops) the microcomputer (step S120), and returns to the check process in step S110. If the microcomputer is currently stopped, the master camera control device 110A returns directly to the check process in step S110.

The client camera control device 110B performs a process of setting the time to that of the master camera control device 110A in accordance with IEEE 1588 (PTP) (step S121) in parallel with the process in the master camera control device 110A described above.

After the client camera control device 110B starts the time synchronization process, the client camera control device 110B checks the synchronization of time with the master camera control device 110A using PTP (step S122). If time is synchronized with the master camera control device 110A through the time synchronization process, the client camera control device 110B checks the startup state of the microcomputer (step S123). This check process is performed by, for example, the control unit 126. The microcomputer for which the startup state is to be checked here can be a microcomputer for controlling the camera 114B.

If a result of the determination in step S123 indicates that the microcomputer is currently stopped, the client camera control device 110B sets a synchronization signal type in a register (step S124), and starts up the microcomputer (step S125). If the result of the determination in step S123 indicates that the microcomputer is currently starting up, the client camera control device 110B skips the processes in steps S124 and S125.

Subsequently, the client camera control device 110B checks the state of the register of the microcomputer (step S126). This check process is performed by, for example, the control unit 126. If the state of the register is normal, the client camera control device 110B sends a synchronization signal to the camera 114B (step S127). After sending the synchronization signal to the camera 114B, the client camera control device 110B returns the procedure to the process of checking the synchronization of time with the master camera control device 110A using PTP in step S122. By contrast, if the state of the register is not normal, the client camera control device 110B resets (or stops) the microcomputer (step S128). After the resetting of (or stopping) the microcomputer, the client camera control device 110B returns the procedure to the process of checking the synchronization of time with the master camera control device 110A using PTP in step S122.

If the check in step S122 indicates that time is not synchronized with the master camera control device 110A, the client camera control device 110B receives the notification sent from the master camera control device 110A in step S117, and stops the time synchronization process using PTP in response to receiving the notification (step S129). The client camera control device 110B then checks the startup state of the microcomputer (step S130). If the microcomputer is currently starting up, the client camera control device 110B resets (or stops) the microcomputer (step S131), and returns to the check process in step S122. If the microcomputer is currently stopped, the client camera control device 110B returns directly to the check process in step S122.

The master camera control device 110A and the client camera control device 110B can synchronize the time by performing the series of operations described above. The master camera control device 110A and the client camera control device 110B can reduce a time gap between images captured by the cameras 114A and 114B by synchronizing the time in such a manner.

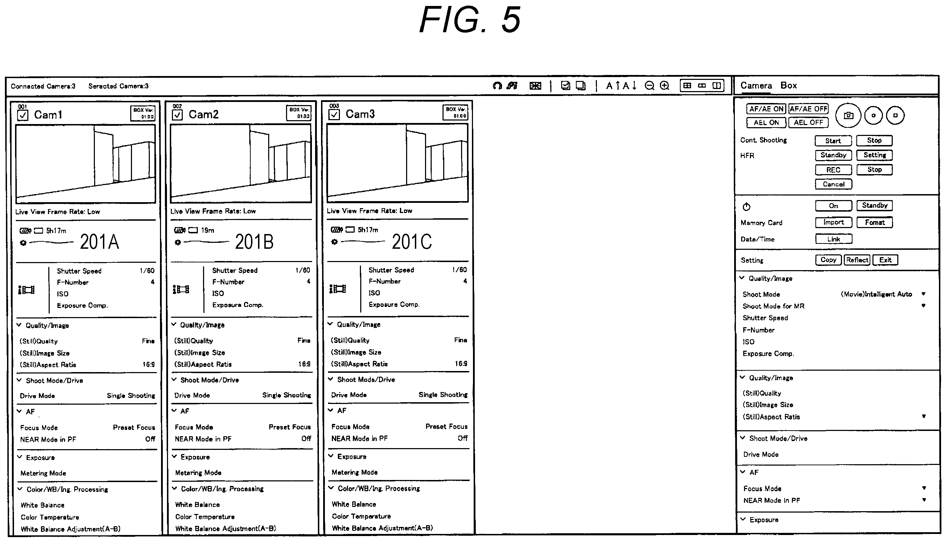

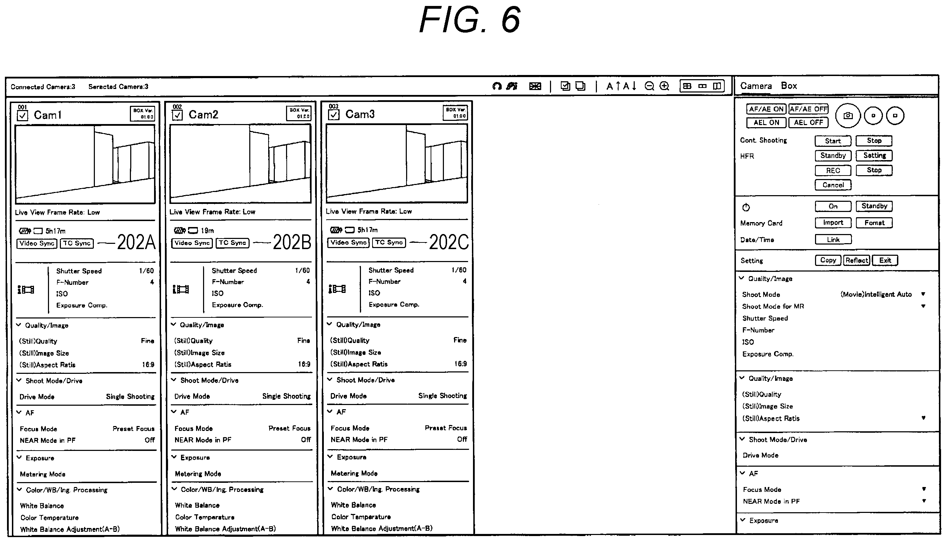

Figs. 5 and 6 are each an explanation diagram illustrating an example of a graphical user interface which is displayed on the screen of the external device 102. Fig. 5 is an explanation diagram illustrating an example of a graphical user interface which is displayed on the screen of the external device 102 while the time synchronization process on the master camera control device and the client camera control device is being performed. Meanwhile, Fig. 6 is an explanation diagram illustrating an example of a graphical user interface which is displayed on the screen of the external device 102 after the time synchronization process on the master camera control device and the client camera control device is completed. In Figs. 5 and 6, information about three camera control devices and the cameras connected to those camera control devices is displayed. The information about the camera control devices and the cameras is obtained from the respective camera control devices that are connected to the external device 102 via the Ethernet connection.

The information about the cameras displayed on the external device 102 can include, for example, a shutter speed, an aperture value, image quality of the image to be captured, an angle of view, an autofocus setting, etc.

While the time synchronization process on the master camera control device and the client camera control device is being performed, the screen of the external device 102 displays icons 201A to 201C indicating that the time synchronization process is being performed.

Then, when the time synchronization process on the master camera control device and the client camera control device is completed, the screen of the external device 102 displays icons 202A to 202C indicating that the time of the master camera control device and the time of the client camera control device are synchronized.

The displaying of the graphical user interface on the screen of the external device 102 in such a manner enables the checking on the progress of the time synchronization process on the master camera control device and the client camera control devices.

### (File Download Process)

Subsequently, a description will be provided of an example of a file download process in saving images captured by the plurality of cameras 114 to the external device 102, as an operation example of the multicamera system 100 according to the embodiment of the present disclosure.

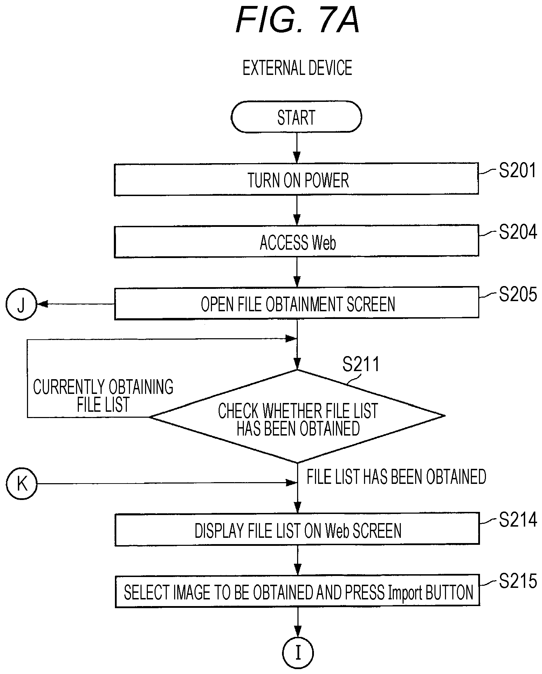

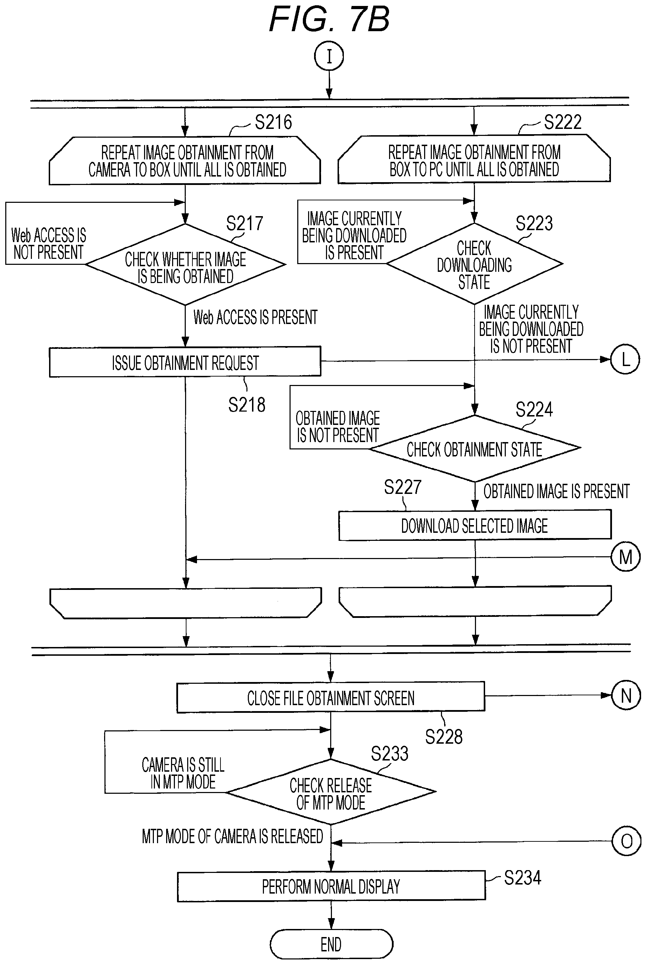

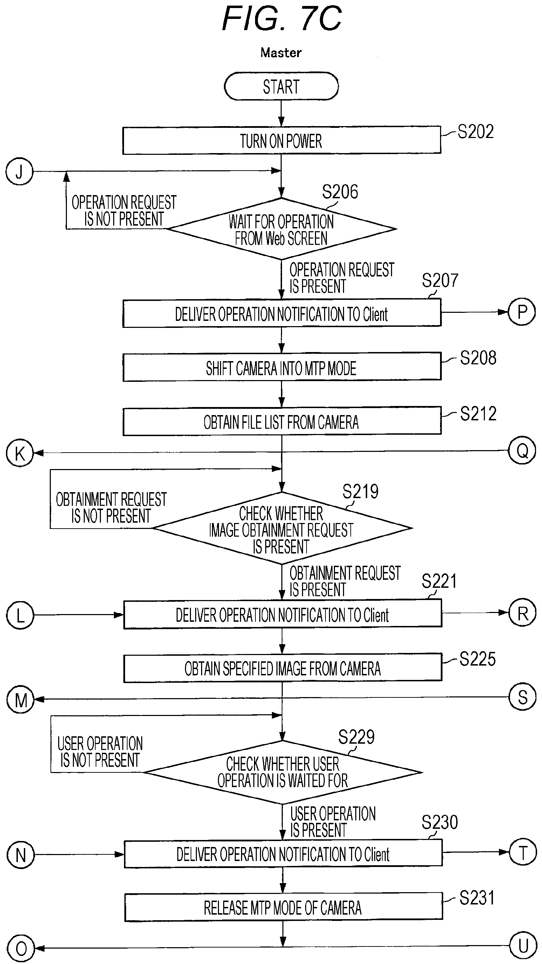

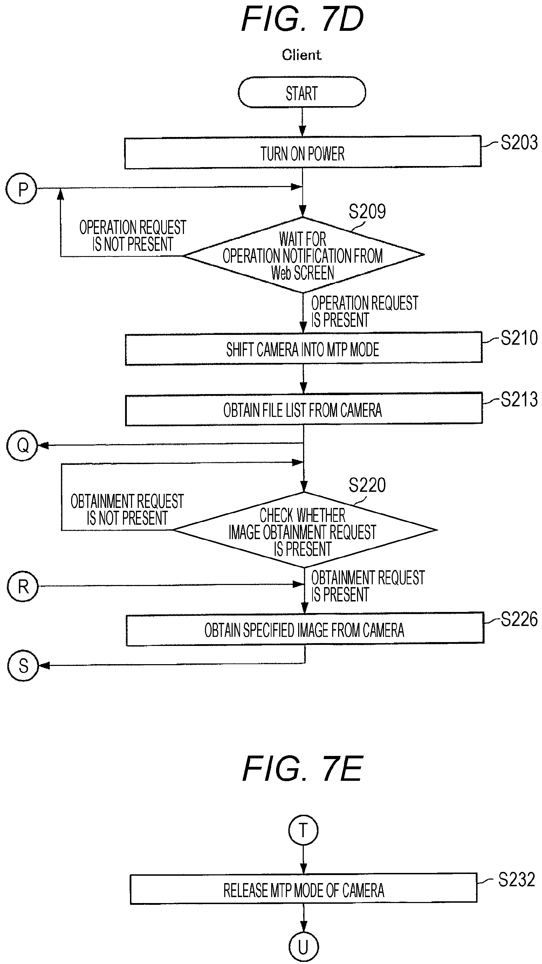

Figs. 7A to 7E are flowcharts each illustrating an operation example of the multicamera system 100 according to the embodiment of the present disclosure. Figs. 7A to 7E each illustrate an example of the file download process in saving images captured by the plurality of cameras 114 to the external device 102. An operation example of the multicamera system 100 according to the embodiment of the present disclosure will be described below with reference to Figs. 7A to 7E. Further, in the following descriptions, the master camera control device is referred to as the master camera control device 110A and the client camera control device as the client camera control device 110B.

Initially, the powers of the external device 102, the master camera control device 110A, and the client camera control device 110B are each turned on (steps S201, S202, and S203). After the power is turned on, the external device 102 then specifies the IP address of the master camera control device 110A by using a web browser to access the web server of the master camera control device 110A (step S204). At this point, the external device 102 performs a normal display for displaying the states of the cameras 114A and 114B on the web browser.

The external device 102 then opens a file obtainment screen on the web browser on the basis of a user operation (step S205). This file obtainment screen is a screen for obtaining images captured by one or the plurality of cameras 114. An example of the file obtainment screen will be described later.

After turning on the power, the master camera control device 110A stands by for an operation from the screen of the web browser displayed on the external device 102 (step S206). If an operation from the screen of the web browser is performed and the operation is to obtain images from the cameras, the master camera control device 110A delivers an operation notification to the client camera control device 110B (step S207). After the operation notification is delivered to the client camera control device 110B, the master camera control device 110A changes the mode of the camera 114A connected thereto, from a live view mode to a media transfer protocol (MTP) mode (a file transfer mode) (step S208). The live view mode refers to a mode in which the image being captured by the camera 114A is output to the external device 102.

After the power is turned on, the client camera control device 110B stands by for the operation notification from the master camera control device 110A (step S209). If the client camera control device 110B receives the operation notification from the master camera control device 110A, the client camera control device 110B changes the mode of the camera 114B connected thereto from the live view mode to the MTP mode (the file transfer mode) (step S210).

The external device 102 checks whether or not the master camera control device 110A and the client camera control device 110B have obtained the file list (step S211) .

After the master camera control device 110A changes the mode of the camera 114A connected thereto to the MTP mode, the master camera control device 110A obtains the file list from the camera 114A in parallel with the process in step S211 described above (step S212). Similarly, after the client camera control device 110B changes the mode of the camera 114B connected thereto to the MTP mode, the client camera control device 110B obtains the file list from the camera 114B (step S213).

The external device 102 displays the file list obtained by each of the master camera control device 110A and the client camera control device 110B on the web browser (step S214). The user of the external device 102 then selects images to be obtained from the file lists and presses a button for obtaining the selected images from the cameras 114A and 114B (the button refers to an Import button in the present embodiment) (step S215).

In response to the Import button described above being pressed, the external device 102 obtains the selected images from the cameras 114A and 114B. In this step, the master camera control device 110A and the client camera control device 110B first obtain the images selected on the web browser of the external device 102 from the cameras 114A and 114B, respectively (step S216). Note that the master camera control device 110A and the client camera control device 110B are collectively referred to as "BOX" in figures, and, further, the external device 102 is referred to as "PC" in figures. The external device 102 checks whether each of the master camera control device 110A and the client camera control device 110B is currently obtaining the images from the cameras 114A and 114B, respectively (step S217). If the images are not currently being obtained, the external device 102 issues, to the master camera control device 110A, a request to obtain the image (step S218).

After the master camera control device 110A obtains the file list from the camera 114A, the master camera control device 110A checks for the image obtainment request issued from the external device 102 (step S219). If there is the image obtainment request issued from the external device 102, the master camera control device 110A delivers, to the client camera control device 110B, a notification that an operation for image obtainment has been performed on the external device 102 (step S220).

The external device 102 downloads images from the master camera control device 110A and the client camera control device 110B (BOX) in parallel with the obtaining of the images from the cameras 114A and 114B, which is performed by the master camera control device 110A and the client camera control device 110B (step S222). The external device 102 checks the state of the downloading of images from the master camera control device 110A and the client camera control device 110B (step S223). If no image currently being downloaded is present, the external device 102 then checks the state of the image obtainment, from the cameras 114A and 114B, by the master camera control device 110A and the client camera control device 110B (step S224).

The master camera control device 110A and the client camera control device 110B obtain the images specified by the external device 102 from the cameras 114A and 114B, respectively, in parallel with the process in step S224 described above (steps S225 and S226).

The external device 102 downloads the images specified in step S215 described above from the master camera control device 110A and the client camera control device 110B (step S227). In other words, the external device 102 downloads, from the master camera control device 110A and the client camera control device 110B, the images obtained from the cameras 114A and 114B in steps S225 and S226, by the master camera control device 110A and the client camera control device 110B, respectively.

In downloading images from the master camera control device 110A and the client camera control device 110B, the external device 102 sets file names so that the file names do not overlap, and downloads them. For example, in downloading images from the master camera control device 110A and the client camera control device 110B, the external device 102 adds a name for uniquely identifying the cameras 114A and 114B to the respective file names. The position at which such a name is added may be the beginning of the file name, for example. For example, if the name "Cam1" is set to the camera 114A, the external device 102 saves an image captured by the camera 114A with a file name such as "Cam1_000001.JPG". Further, for example, if the name "Cam2" is set to the camera 114B, the external device 102 saves an image captured by the camera 114B with a file name such as "Cam2-000001.JPG". The adding of the name for uniquely identifying the cameras 114A and 114B to the file name in such a manner in downloading images makes it possible to avoid overlapping of file names when the images are saved in the external device 102, even in a case where images saved with the same file name are present in the cameras 114A and 114B.

Needless to say, the information to be added to the file name when the external device 102 downloads images from the master camera control device 110A and the client camera control device 110B is not limited to the name for uniquely identifying the cameras. For example, the external device 102 may add a part or all of the IP address of the camera control device connected to the camera, to the file name of the file downloaded from the camera control device. Further, for example, the external device 102 may add a part or all of the MAC address of the camera to the file name of the file downloaded from the camera control device.

When the downloading of the images is completed and the user of the external device 102 closes the file obtainment screen displayed on the web browser (step S228), a user operation notification indicating that the file obtainment screen has been closed is sent from the external device 102 to the master camera control device 110A. The master camera control device 110A stands by for a notification about the operation of closing the file obtainment screen (step S229).

If the master camera control device 110A receives the notification about the operation of closing the file obtainment screen, the master camera control device 110A delivers an operation notification to the client camera control device 110B (step S230). The master camera control device 110A then releases the MTP mode of the camera 114A connected thereto (step S231). Similarly, the client camera control device 110B releases the MTP mode of the camera 114B connected thereto (step S232). If the MTP mode of the respective cameras 114A and 114B is released, the mode of the respective cameras 114A and 114B returns to the live view mode.

If the file obtainment screen displayed on the web browser is closed by a user operation, the external device 102 checks whether the MTP mode of the respective cameras 114A and 114B has been released (step S233). Then, if the MTP mode of the respective cameras 114A and 114B is released, the external device 102 performs the normal display for displaying the states of the cameras 114A and 114B on the web browser (step S234).

The external device 102 according to the embodiment of the present disclosure can obtain images captured by the cameras 114A and 114B from the master camera control device 110A and the client camera control device 110B, respectively, by executing the series of operations described above.

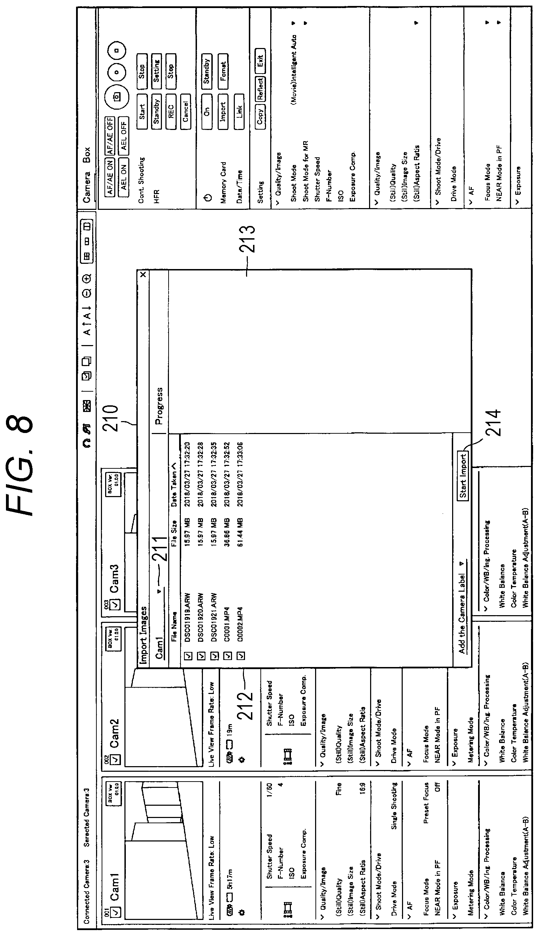

Figs. 8 to 12 are each an explanation diagram illustrating an example of a graphical user interface which is displayed on the screen of the external device 102. Fig. 8 illustrates an example of a user interface for importing images from the camera 114. Fig. 8 illustrates a window 210 for importing images, a pull-down menu 211 for selecting the target camera 114, a file list display area 212 for displaying a file list, a progress display area 213 for displaying the progress of downloading of images from the camera control device 110, and an Import button 214 for performing image import. The file list is displayed in the file list display area 212 through process of step S214 described above.

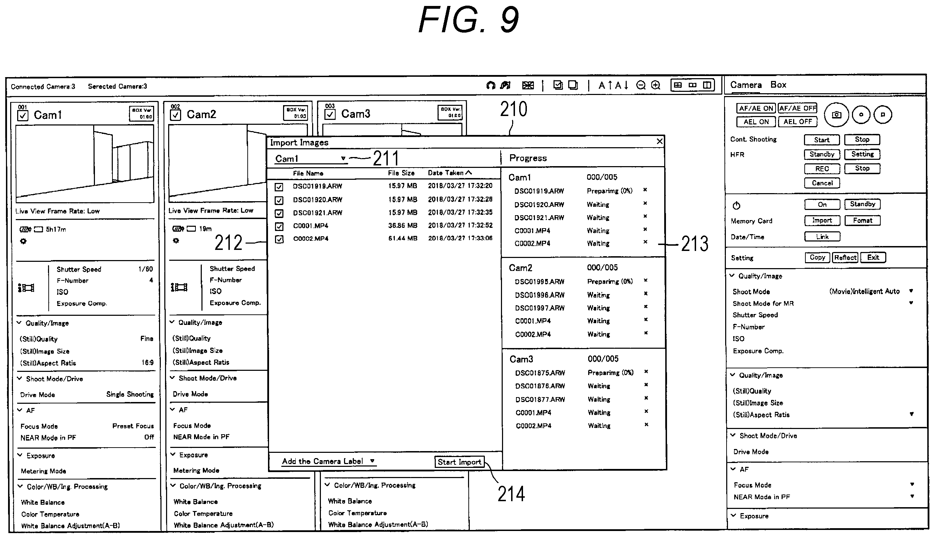

Fig. 9 illustrates an example of a graphical user interface which is displayed after the user selects images to be imported and the user presses the Import button 214. In response to the user pressing the Import button 214, the external device 102 performs downloading of the images from the camera control device 110. In the progress display area 213, the progress of downloading of the images from the camera control device 110 is displayed.

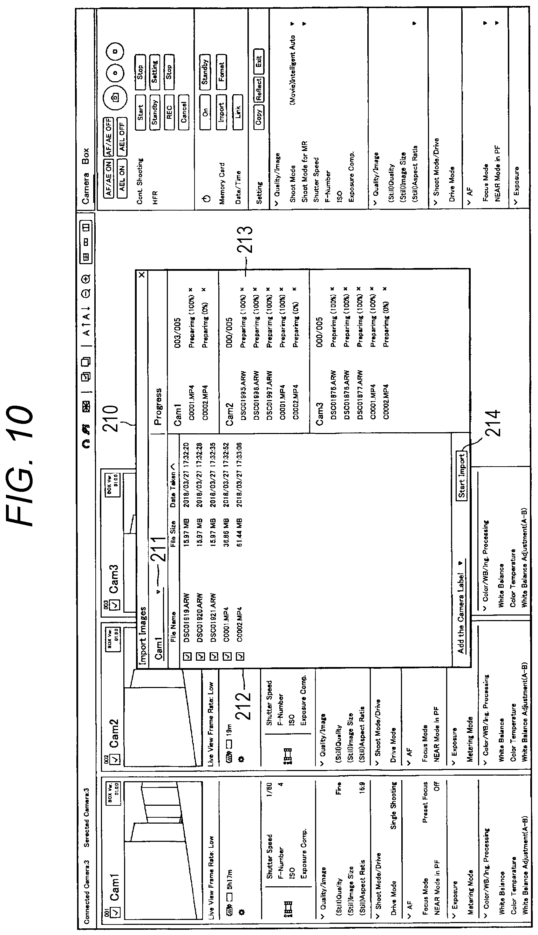

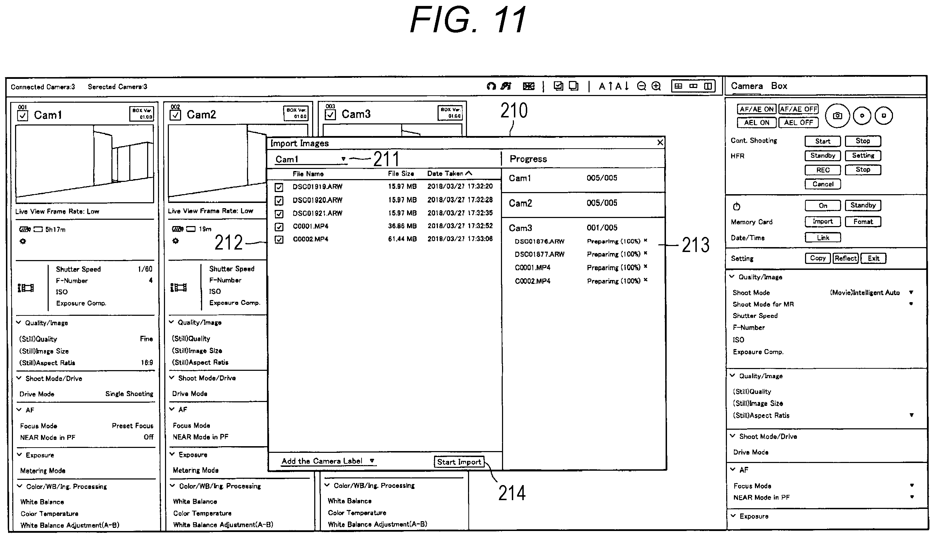

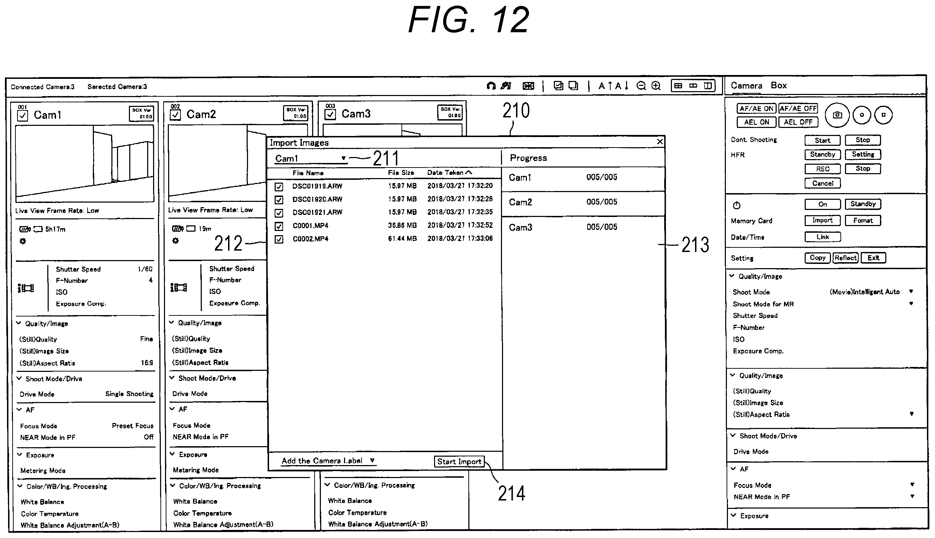

The file names of the files that have been downloaded are deleted from the progress display area 213, as illustrated in Figs. 10 and 11. Then, when the downloading of all the files is completed, all the file names are deleted from the progress display area 213, as illustrated in Fig. 12.

In such a manner, the multicamera system according to the present embodiment can save images captured by the respective cameras, by batch, in the external device 102. The file name of content recorded in each camera, however, depends on the settings and the state of the individual camera. In the multicamera system, in creating VR content or 3D content, there is no dependency on the content in a single camera, but on the respective pieces of content in the same scene captured by the plurality of cameras. It is difficult to determine this dependency from the file name of the file saved from each camera to the external device 102 or the folder where the file is saved. In other words, if the respective pieces of content in the same scene can be easily grouped, the user who creates the VR content or the 3D content can more easily create the VR content or the 3D content.

Thus, the multicamera system according to the present embodiment obtains, on the basis of a predetermined rule, the content captured by each camera at a timing in accordance with the rule, from the camera control device 110 when saving the content recorded by each camera to the external device 102. Specifically, when the multicamera system according to the present embodiment saves the content recorded by each camera to the external device 102, the multicamera system saves the content in such a format which allows easy grouping of the pieces of content obtained in the same scene, that is, the pieces of content obtained at the same time (such content includes a video captured in synchronized imaging, a video captured at the same timing, a video with the same timecode, etc.)

To give an example, as the predetermined rule described above, when saving the content recorded by each camera to the external device 102, the multicamera system according to the present embodiment saves only the latest content to the external device 102. The saving of only the latest content to the external device 102 enables the user who creates the VR content or the 3D content to easily group the pieces of content in the latest scene. Further, as the predetermined rule described above, when saving the content recorded by each camera to the external device 102, the multicamera system according to the present embodiment may save a plurality of pieces of the latest content to the external device 102.

Further, for example, as the predetermined rule described above, when saving the content recorded by each camera to the external device 102, the multicamera system according to the present embodiment adds an image capture time to the file name and saves the content to the external device 102. The image capture time may be added before or after the file name. Addition of the image capture time to the file name may be performed by the camera control devices 110 connected to the respective cameras 114, or by the external device 102 that has obtained the file. As described above, the plurality of camera control devices and the plurality of cameras are synchronized in time with high accuracy, so that the image capture time added to the file name of the content obtained by capturing images in the same scene is the same for all the cameras that have performed the image capturing. Thus, the user who creates the VR content or the 3D content can easily group the pieces of content obtained by capturing images in the same scene, by looking at the image capture time added to the file name.

Further, for example, when saving the content recorded by each camera to the external device 102, the multicamera system according to the present embodiment selects the pieces of content included in the same group as that of a piece of content that is selected by the user from among pieces of content obtained by image capturing with a single camera, for example, the content with the image capture time, from other cameras, and saves these pieces of content to the external device 102. As described above, the plurality of camera control devices and the plurality of cameras are synchronized in time with high accuracy, so that it is easy to select the pieces of content with the same image capture time from other cameras. By contrast, in a case where simultaneous imaging of JPEG and RAW still images or simultaneous imaging with cameras including simultaneous imaging of videos with different resolutions is performed, the grouping of pieces of content cannot correctly be performed on the basis of the image capture time alone. In this case, not only the image capture time, but also the match between the extension and the resolution of the content may be used for the grouping determination. The content selected by the user may also be content obtained through image capturing of a camera connected to the master camera control device, for example. Thus, the user who creates the VR content or the 3D content can easily group the pieces of content obtained by capturing images in the same scene. Note that, in addition to the pieces of content with the same image capture time, the pieces of content obtained by image capturing before and after the same image capture time may also be selected. The pieces of content obtained by image capturing before and after the same image capture time may be M pieces of content (M is an integer) before and after the content at the image capture time, pieces of content obtained by image capturing in N seconds (N is an integer) before and after the time, or pieces of content that belongs to a group, including the selected content, at the time of continuous image capturing.

Further, for example, in saving the content recorded by each camera to the external device 102, the multicamera system according to the present embodiment saves, to the external device 102, the content with the file name to which a predetermined identifier that is set every image capturing is added. The identifier may be added before or after the file name. The addition of the identifier to the file name may be performed by the camera control device 110 connected to the respective cameras 114, or by the external device 102 that has obtained the file. The identifier may be specified by the user when content is saved to the external device 102. Alternatively, the identifier may be the time when the camera is instructed to capture the image. The identifier specified by the external device 102 is sent to the camera control device, and the camera control device passes the identifier to the camera connected thereto. The camera adds the identifier received from the camera control device and records the content.

Further, for example, in saving the content recorded by each camera to the external device 102, the multicamera system according to the present embodiment saves, to the external device 102, the content with the file name to which an identifier or a predetermined free word that is set every image capturing is added. The identifier or free word may be added before or after the file name. The addition of the free word to the file name may be performed by the camera control device 110 connected to the respective cameras 114, or by the external device 102 that has obtained the file. The free word may be specified by the user when content is saved to the external device 102. The free word specified by the external device 102 is sent to the camera control device, and the camera control device passes the free word to the camera connected thereto. The camera adds the free word received from the camera control device and records the content.

In saving pieces of content obtained by image capturing with the plurality of cameras 114 to the external device 102, the pieces of content obtained by image capturing at the same time may be saved in the same folder.

Further, while the pieces of content obtained by image capturing with the plurality of cameras 114 are saved to the external device 102 in the above description, the present disclosure is not limited to such an example. The pieces of content obtained by image capturing with the plurality of cameras 114 may be saved in a cloud storage on the Internet instead of the external device 102.

A concrete operation example will be described. The indication has been provided of an example of the file download process by using Figs. 7A to 7E, in saving images captured by the plurality of cameras 114 to the external device 102 in the multicamera system according to the present embodiment. At that time, the multicamera system according to the present embodiment saves the content in the same scene described above to the external device 102 in such a format which allows easy grouping.

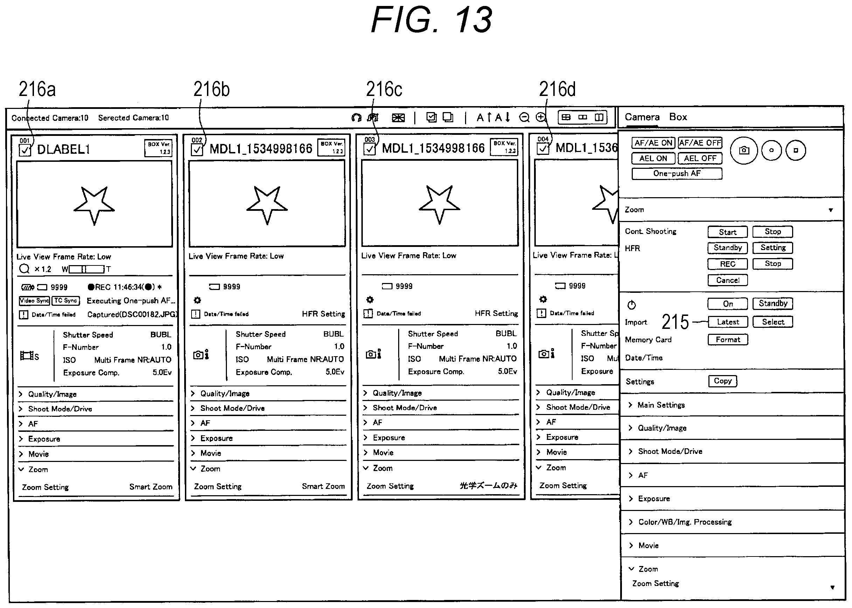

Fig. 13 is an explanation diagram illustrating an example of a graphical user interface which is displayed on the screen of the external device 102. Fig. 13 illustrates an example of a user interface for importing images from the camera 114. Fig. 13 illustrates a Latest button 215 for executing the importing of images saved by the camera 114, and check boxes 216a to 216d for selecting the camera 114 from which images are imported.

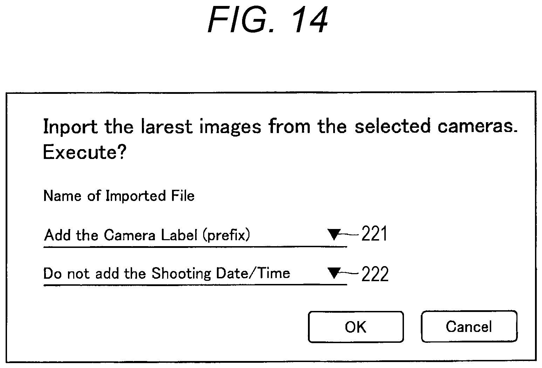

Fig. 14 is an explanation diagram illustrating an example of a graphical user interface which is displayed on the screen of the external device 102. Fig. 14 illustrates an example of a user interface when the user selects the Latest button 215. Fig. 14 illustrates a pull-down menu 221 for selecting whether or not to add a label of the camera 114 to the file name and a pull-down menu 222 for selecting whether or not to add the date and time of image capturing to the file name when images are downloaded from the camera control device 110. The user can download content having the file name with the date and time of image capturing added from the camera control device 110 to the external device 102 by operating the pull-down menus 221 and 222.

The user may operate the external device 102 to notify the camera control device 110 that serves as the master, of a sequence number and/or a free word in order to save the content in the same scene to the external device 102 in such a format which allows easy grouping. Here, the same scene refers to, for example, video content obtained by performing imaging from different angles. The content (videos) in the same scene refers to content that is the same in video length, video reproduction time, duration, and timecode. Furthermore, the content (videos) in the same scene is controlled so that the features of the video content (a frame rate, a white balance, an exposure, etc.) are the same. The camera control device 110 that serves as the master notifies the sequence number and/or the free word to the other camera control devices 110 that serve as the clients. The respective camera control devices 110 then instruct the respective cameras 114 to capture images with a file name to which the sequence number and/or the free word is added. Each camera may also capture images with the sequence number and/or the free word embedded in metadata instead of the file name.

When the user selects the Latest button 215, the external device 102 may display a message indicating that there is a camera control device 110 that has no content obtained through the image capturing at the same time in a case where there is a camera control device 110 that has no content obtained through the image capturing at the same time.

The user can save the content in the same scene to the external device 102 in such a format which allows easy grouping, by operating the external device 102 to import the content thus image-captured from each camera to the external device 102.

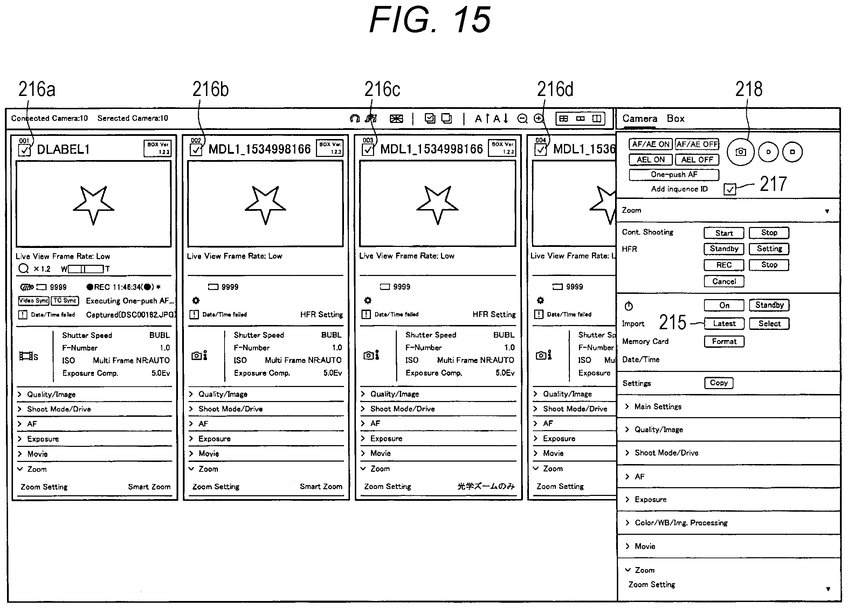

Fig. 15 is an explanation diagram illustrating an example of a graphical user interface which is displayed on the screen of the external device 102. Fig. 15 illustrates an example of a user interface for importing images from the camera 114. Fig. 15 illustrates the Latest button 215 for executing the importing of images saved by the camera 114, the check boxes 216a to 216d for selecting the camera 114 from which images are to be imported, a check box 217 for instructing each camera 114 to capture an image with a file name to which the sequence number is added, and an image capture instruction button 218.

When the user selects the image capture instruction button 218 in a state where the check box 216 is checked, the external device 102 instructs each camera 114 to capture an image with the file name to which the sequence number is added via the camera control device 110 that serves as the master.

<2. Application Example>

The technology according to the present disclosure can be applied to various products. For example, the technology according to the present disclosure may be applied to an operating room system.

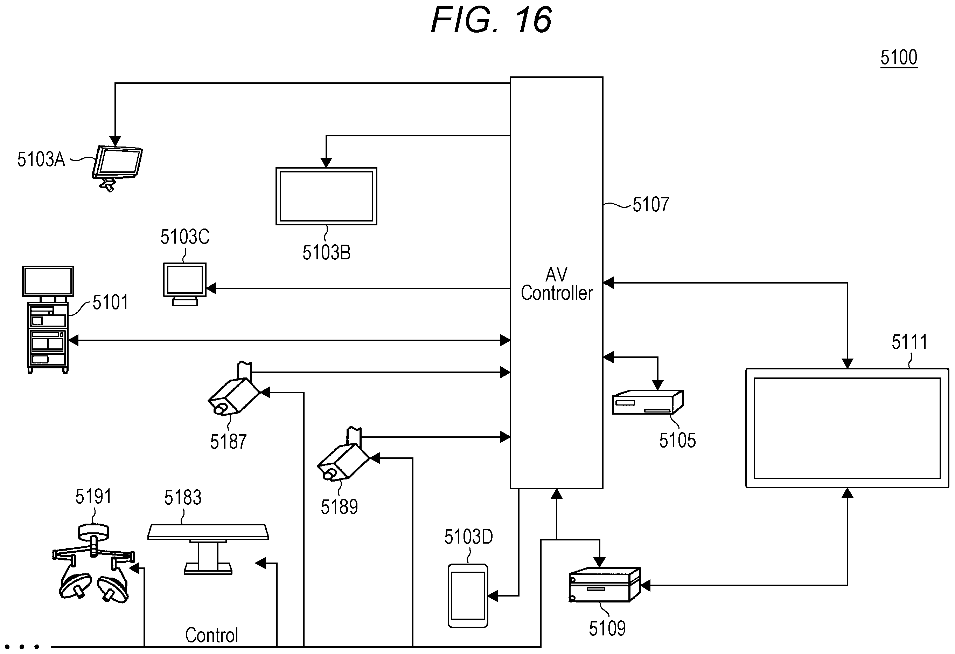

Fig. 16 is a view schematically illustrating a general configuration of an operating room system 5100 to which the technology according to the present disclosure can be applied. Referring to Fig. 16, the operating room system 5100 is configured such that a group of apparatuses installed in an operating room is connected for cooperation with each other through an audiovisual (AV) controller 5107 and an operating room controlling apparatus 5109.

In the operating room, various apparatuses may be installed. In Fig. 16, as an example, an apparatus group 5101 having various apparatuses for endoscopic surgery, a ceiling camera 5187, a surgery field camera 5189, a plurality of display apparatuses 5103A to 5103D, a recorder 5105, a patient bed 5183, and an illumination 5191 are illustrated. The ceiling camera 5187 is provided on the ceiling of an operating room and images the hands of a surgeon. The surgery field camera 5189 is provided on the ceiling of the operating room and images a state of the entire operating room.

Here, among the apparatuses mentioned, the apparatus group 5101 belongs to an endoscopic surgery system 5113 hereinafter described and includes an endoscope, a display apparatus which displays an image captured by the endoscope, and the like. Individual apparatuses belonging to the endoscopic surgery system 5113 are referred to also as medical equipment. Meanwhile, the display apparatuses 5103A to 5103D, the recorder 5105, the patient bed 5183, and the illumination 5191 are apparatuses which are equipped, for example, in the operating room separately from the endoscopic surgery system 5113. These apparatuses which do not belong to the endoscopic surgery system 5113 are referred to also as non-medical equipment. The audiovisual controller 5107 and/or the operating room controlling apparatus 5109 cooperatively control operation of the medical equipment and the non-medical equipment with each other.

The audiovisual controller 5107 integrally controls processes of the medical equipment and the non-medical equipment relating to image display. Specifically, each of the apparatus group 5101, the ceiling camera 5187, and the surgery field camera 5189 from among the apparatuses provided in the operating room system 5100 may be an apparatus having a function of sending information to be displayed during surgery (such information is hereinafter referred to also as display information, and the apparatus mentioned is hereinafter referred to also as an apparatus of a sending source). Meanwhile, each of the display apparatuses 5103A to 5103D may be an apparatus to which display information is output (the apparatus is hereinafter referred to also as apparatus of an output destination). Further, the recorder 5105 may be an apparatus which serves as both of an apparatus of a sending source and an apparatus of an output destination. The audiovisual controller 5107 has a function of controlling operation of an apparatus of a sending source and an apparatus of an output destination to acquire display information from the apparatus of the sending source and transmit the display information to the apparatus of the output destination so as to be displayed or recorded. It is to be noted that the display information includes various images captured during surgery, various kinds of information relating to the surgery (for example, physical information of a patient, inspection results in the past, or information regarding a surgical procedure), and the like.

Specifically, to the audiovisual controller 5107, information relating to an image of a surgical region in a body cavity of a patient imaged by the endoscope may be transmitted as the display information from the apparatus group 5101. Further, from the ceiling camera 5187, information relating to an image of the hands of the surgeon captured by the ceiling camera 5187 may be transmitted as display information. Further, from the surgery field camera 5189, information relating to an image captured by the surgery field camera 5189 and illustrating a state of the entire operating room may be transmitted as display information. It is to be noted that, if a different apparatus having an imaging function exists in the operating room system 5100, then the audiovisual controller 5107 may also acquire information relating to an image captured by the different apparatus as display information from the different apparatus.

Alternatively, for example, in the recorder 5105, information relating to such images as mentioned above captured in the past is recorded by the audiovisual controller 5107. The audiovisual controller 5107 can acquire, as display information, information relating to the images captured in the past from the recorder 5105. It is to be noted that various pieces of information relating to surgery may also be recorded in advance in the recorder 5105.

The audiovisual controller 5107 controls at least one of the display apparatuses 5103A to 5103D, which are apparatuses of output destinations, to display acquired display information (namely, images captured during surgery or various pieces of information relating to the surgery). In the example illustrated, the display apparatus 5103A is a display apparatus installed so as to be suspended from the ceiling of the operating room; the display apparatus 5103B is a display apparatus installed on a wall face of the operating room; the display apparatus 5103C is a display apparatus installed on a desk in the operating room; and the display apparatus 5103D is a mobile apparatus (for example, a tablet personal computer (PC)) having a display function.

Further, though not illustrated in Fig. 16, the operating room system 5100 may include an apparatus outside the operating room. The apparatus outside the operating room may be, for example, a server connected to a network constructed inside and outside the hospital, a PC used by a medical staff, a projector installed in a meeting room of the hospital, or the like. In a case where such an external apparatus is located outside the hospital, it is also possible for the audiovisual controller 5107 to cause display information to be displayed on a display apparatus of a different hospital through a teleconferencing system or the like to perform telemedicine.

The operating room controlling apparatus 5109 integrally controls processes other than processes relating to image display on the non-medical equipment. For example, the operating room controlling apparatus 5109 controls driving of the patient bed 5183, the ceiling camera 5187, the surgery field camera 5189, and the illumination 5191.

In the operating room system 5100, a centralized operation panel 5111 is provided such that the user can issue an instruction regarding image display to the audiovisual controller 5107 or issue an instruction regarding operation of the non-medical equipment to the operating room controlling apparatus 5109 through the centralized operation panel 5111. The centralized operation panel 5111 is configured by providing a touch panel on a display face of a display apparatus.

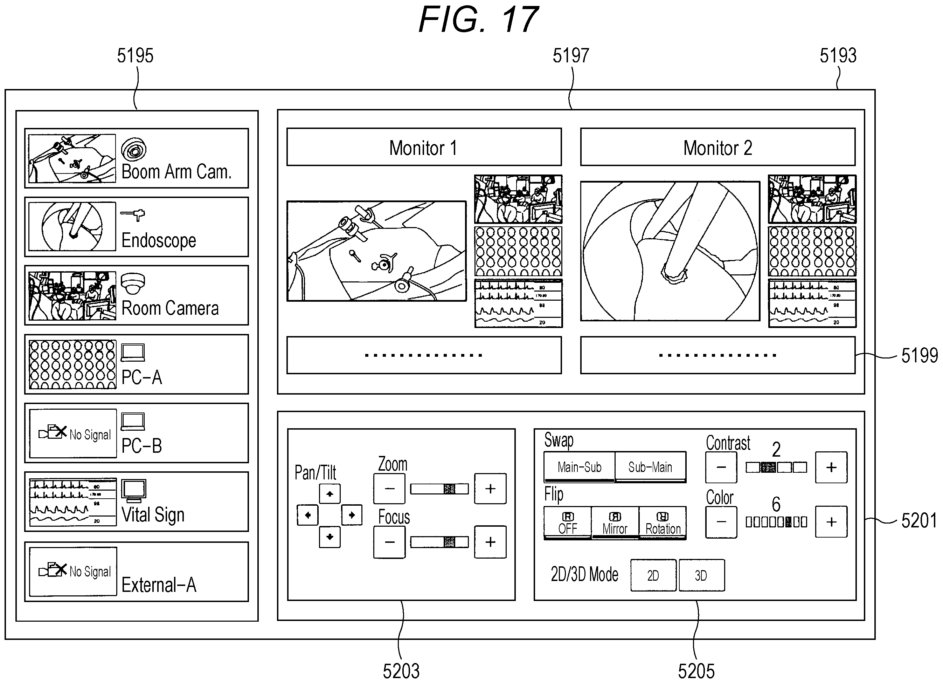

Fig. 17 is a view illustrating an example of display of an operation screen image on the centralized operation panel 5111. In Fig. 17, as an example, an operation screen image is illustrated which corresponds to a case in which two display apparatuses are provided as apparatuses of output destinations in the operating room system 5100. Referring to Fig. 17, the operation screen image 5193 includes a sending source selection region 5195, a preview region 5197, and a control region 5201.

In the sending source selection region 5195, the sending source apparatus provided in the operating room system 5100 and thumbnail screen images representative of display information the sending source apparatus have are displayed in an associated manner with each other. The user can select display information to be displayed on the display apparatus from any of the sending source apparatuses displayed in the sending source selection region 5195.

In the preview region 5197, a preview of screen images displayed on two display apparatuses (Monitor 1 and Monitor 2) which are apparatuses of output destinations is displayed. In the example illustrated, four images are displayed by picture in picture (PinP) display in regard to one display apparatus. The four images correspond to display information sent from the sending source apparatus selected in the sending source selection region 5195. One of the four images is displayed in a comparatively large size as a main image while the remaining three images are displayed in a comparatively small size as sub images. The user can exchange between the main image and the sub images by suitably selecting one of the images from among the four images displayed in the region. Further, a status displaying region 5199 is provided below the region in which the four images are displayed, and a status relating to surgery (for example, elapsed time of the surgery, physical information of the patient and the like) may be displayed suitably in the status displaying region 5199.

A sending source operation region 5203 and an output destination operation region 5205 are provided in the control region 5201. In the sending source operation region 5203, a graphical user interface (GUI) part for performing an operation for an apparatus of a sending source is displayed. In the output destination operation region 5205, a GUI part for performing an operation for an apparatus of an output destination is displayed. In the example illustrated, GUI parts for performing various operations for a camera (panning, tilting, and zooming) in an apparatus of a sending source having an imaging function are provided in the sending source operation region 5203. The user can control operation of the camera of an apparatus of a sending source by suitably selecting any of the GUI parts. It is to be noted that, though not illustrated, in a case where the apparatus of a sending source selected in the sending source selection region 5195 is a recorder (namely, in a case where an image recorded in the recorder in the past is displayed in the preview region 5197), GUI parts for performing operations such as reproduction of the image, stopping of reproduction, rewinding, and fast-feeding may be provided in the sending source operation region 5203.

Further, in the output destination operation region 5205, GUI parts for performing various operations for display on a display apparatus which is an apparatus of an output destination (swap, flip, color adjustment, contrast adjustment, and switching between two dimensional (2D) display and three dimensional (3D) display) are provided. The user can operate the display of the display apparatus by suitably selecting any of the GUI parts.

It is to be noted that the operation screen image to be displayed on the centralized operation panel 5111 is not limited to the illustrated example, and the user may be able to perform operation inputting to each apparatus which can be controlled by the audiovisual controller 5107 and the operating room controlling apparatus 5109 provided in the operating room system 5100 through the centralized operation panel 5111.

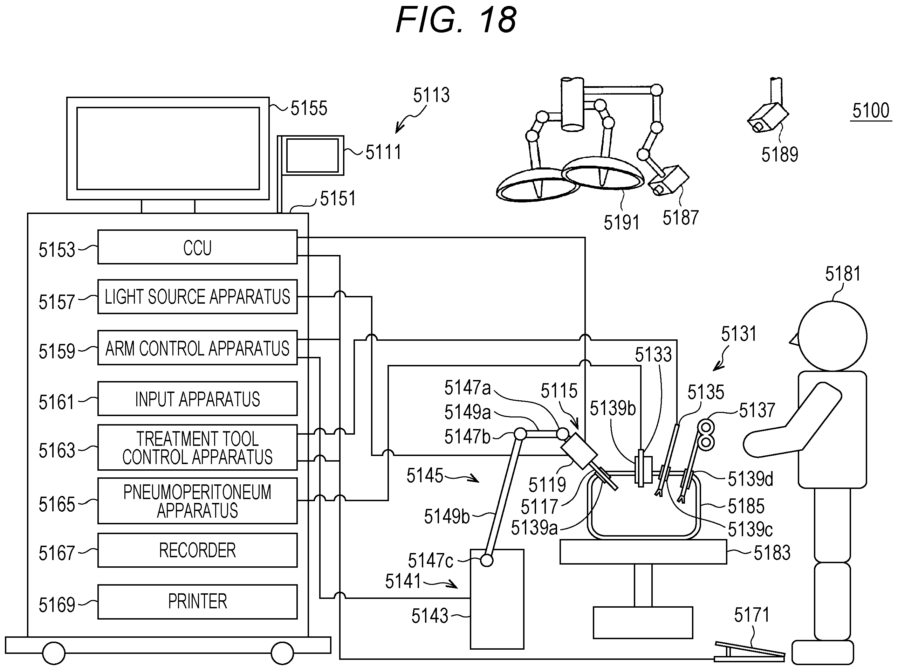

Fig. 18 is a view illustrating an example of a state of surgery to which the operating room system described above is applied. The ceiling camera 5187 and the surgery field camera 5189 are provided on the ceiling of the operating room such that they can image the hands of a surgeon (medical doctor) 5181 who performs treatment for an affected area of a patient 5185 on the patient bed 5183 and the entire operating room. The ceiling camera 5187 and the surgery field camera 5189 may include a magnification adjustment function, a focal distance adjustment function, an imaging direction adjustment function, and the like. The illumination 5191 is provided on the ceiling of the operating room and irradiates at least upon the hands of the surgeon 5181. The illumination 5191 may be configured such that the irradiation light amount, the wavelength (color) of the irradiation light, the irradiation direction of the light, and the like can be adjusted suitably.

The endoscopic surgery system 5113, the patient bed 5183, the ceiling camera 5187, the surgery field camera 5189, and the illumination 5191 are connected for cooperation with each other through the audiovisual controller 5107 and the operating room controlling apparatus 5109 (not illustrated in Fig. 18) as illustrated in Fig. 16. The centralized operation panel 5111 is provided in the operating room, and the user can suitably operate the apparatuses existing in the operating room through the centralized operation panel 5111 as described hereinabove.

In the following, a configuration of the endoscopic surgery system 5113 is described in detail. As illustrated, the endoscopic surgery system 5113 includes an endoscope 5115, other surgical tools 5131, a support arm apparatus 5141 which supports the endoscope 5115 thereon, and a cart 5151 on which various apparatuses for endoscopic surgery are mounted.

In endoscopic surgery, in place of incision of the abdominal wall to perform laparotomy, a plurality of tubular aperture devices called trocars 5139a to 5139d are used to puncture the abdominal wall. Then, a lens barrel 5117 of the endoscope 5115 and the other surgical tools 5131 are inserted into the body cavity of the patient 5185 through the trocars 5139a to 5139d. In the example illustrated, as the other surgical tools 5131, a pneumoperitoneum tube 5133, an energy device 5135, and forceps 5137 are inserted into the body cavity of the patient 5185. Further, the energy device 5135 is a treatment tool for performing incision and peeling of a tissue, sealing of a blood vessel, or the like by high frequency current or ultrasonic vibration. However, the surgical tools 5131 illustrated are mere examples at all, and as the surgical tools 5131, various surgical tools which are generally used in endoscopic surgery such as, for example, tweezers or a retractor may be used.

An image of a surgical region in the body cavity of the patient 5185 captured by the endoscope 5115 is displayed on a display apparatus 5155. The surgeon 5181 would use the energy device 5135 or the forceps 5137 while watching the image of the surgical region displayed on the display apparatus 5155 on the real time to perform such treatment as, for example, resection of an affected area. It is to be noted that, though not illustrated, the pneumoperitoneum tube 5133, the energy device 5135, and the forceps 5137 are supported by the surgeon 5181, an assistant, or the like during surgery.

### (Support arm apparatus)

The support arm apparatus 5141 includes an arm unit 5145 extending from a base unit 5143. In the example illustrated, the arm unit 5145 includes joint units 5147a, 5147b, and 5147c and links 5149a and 5149b and is driven under the control of an arm control apparatus 5159. The endoscope 5115 is supported by the arm unit 5145 such that the position and the posture of the endoscope 5115 are controlled. Consequently, stable fixation in position of the endoscope 5115 can be implemented.

### (Endoscope)

The endoscope 5115 includes the lens barrel 5117 which has a region of a certain length from a distal end thereof to be inserted into the body cavity of the patient 5185, and a camera head 5119 connected to a proximal end of the lens barrel 5117. In the example illustrated, the endoscope 5115 is illustrated as a rigid endoscope having the lens barrel 5117 of the hard type. However, the endoscope 5115 may otherwise be configured as a flexible endoscope having the lens barrel 5117 of the flexible type.

The lens barrel 5117 has, at a distal end thereof, an opening in which an objective lens is fitted. A light source apparatus 5157 is connected to the endoscope 5115 such that light generated by the light source apparatus 5157 is introduced to the distal end of the lens barrel 5117 by a light guide extending in the inside of the lens barrel 5117 and is applied toward an observation target in the body cavity of the patient 5185 through the objective lens. It is to be noted that the endoscope 5115 may be a forward-viewing endoscope or may be an oblique-viewing endoscope or a side-viewing endoscope.

An optical system and an imaging element are provided in the inside of the camera head 5119 such that reflected light (observation light) from the observation target is condensed on the imaging element by the optical system. The observation light is photo-electrically converted by the imaging element to generate an electric signal corresponding to the observation light, namely, an image signal corresponding to an observation image. The image signal is transmitted as RAW data to a camera control unit (CCU) 5153. It is to be noted that the camera head 5119 has a function incorporated therein for suitably driving the optical system of the camera head 5119 to adjust the magnification and the focal distance.

It is to be noted that, in order to establish compatibility with, for example, a stereoscopic vision (3D display), a plurality of imaging elements may be provided on the camera head 5119. In this case, a plurality of relay optical systems is provided in the inside of the lens barrel 5117 in order to guide observation light to the plurality of respective imaging elements.

### (Various Apparatuses Incorporated in Cart)

The CCU 5153 includes a central processing unit (CPU), a graphics processing unit (GPU), or the like and integrally controls operation of the endoscope 5115 and the display apparatus 5155. Specifically, the CCU 5153 performs, for an image signal received from the camera head 5119, various image processes for displaying an image based on the image signal such as, for example, a development process (demosaic process). The CCU 5153 provides the image signal for which the image processes have been performed to the display apparatus 5155. Further, the audiovisual controller 5107 illustrated in Fig. 16 is connected to the CCU 5153. The CCU 5153 provides the image signal for which the image processes have been performed also to the audiovisual controller 5107. Further, the CCU 5153 transmits a control signal to the camera head 5119 to control driving of the camera head 5119. The control signal may include information regarding an imaging condition such as a magnification or a focal distance. The information regarding an imaging condition may be input through an input apparatus 5161 or may be input through the centralized operation panel 5111 described hereinabove.

The display apparatus 5155 displays an image based on an image signal for which the image processes have been performed by the CCU 5153 under the control of the CCU 5153. If the endoscope 5115 is ready for imaging of a high resolution such as 4K (horizontal pixel number 3840 × vertical pixel number 2160), 8K (horizontal pixel number 7680 × vertical pixel number 4320), or the like, for example, and/or ready for 3D display, then a display apparatus by which corresponding display of the high resolution and/or 3D display are possible may be used as the display apparatus 5155. In a case where the apparatus is ready for imaging of a high resolution such as 4K or 8K, if the display apparatus used as the display apparatus 5155 has a size of equal to or not less than 55 inches, then a more immersive experience can be obtained. Further, depending on the application, a plurality of display apparatuses 5155 having different resolutions and/or different sizes may also be provided.

The light source apparatus 5157 includes a light source such as, for example, a light emitting diode (LED) and supplies irradiation light for imaging of a surgical region to the endoscope 5115.

The arm control apparatus 5159 includes a processor such as a CPU, for example, and operates in accordance with a certain program to control driving of the arm unit 5145 of the support arm apparatus 5141 in accordance with a certain controlling method.

The input apparatus 5161 is an input interface for the endoscopic surgery system 5113. A user can perform inputting of various kinds of information or instruction inputting to the endoscopic surgery system 5113 through the input apparatus 5161. For example, the user would input various kinds of information relating to surgery such as physical information of a patient, information regarding a surgical procedure of the surgery, and the like through the input apparatus 5161. Further, the user would input, for example, an instruction to drive the arm unit 5145, an instruction to change an imaging condition (type of irradiation light, magnification, focal distance, or the like) by the endoscope 5115, an instruction to drive the energy device 5135, or the like through the input apparatus 5161.

The type of the input apparatus 5161 is not limited and may be that of any one of various known input apparatuses. As the input apparatus 5161, for example, a mouse, a keyboard, a touch panel, a switch, a foot switch 5171, a lever, and/or the like may be applied. In a case where a touch panel is used as the input apparatus 5161, the touch panel may be provided on the display face of the display apparatus 5155.

The input apparatus 5161 is otherwise a device to be mounted on a user such as, for example, a glasses type wearable device or a head mounted display (HMD), and various kinds of inputting are performed in response to a gesture or a line-of-sight of the user detected by any of the devices mentioned. Further, the input apparatus 5161 includes a camera which can detect a motion of a user, and various kinds of inputting are performed in response to a gesture or a line-of-sight of a user detected from a video captured by the camera. Further, the input apparatus 5161 includes a microphone which can collect the voice of a user, and various kinds of inputting are performed by voice through the microphone. By configuring the input apparatus 5161 such that various kinds of information can be input in a contactless fashion in this manner, especially a user who belongs to a clean area (for example, the surgeon 5181) can operate an apparatus belonging to an unclean area in a contactless fashion. Further, since the user can operate an apparatus without releasing a possessed surgical tool from his/her hand, the user convenience is improved.

A treatment tool control apparatus 5163 controls driving of the energy device 5135 for cautery or incision of a tissue, sealing of a blood vessel, or the like. A pneumoperitoneum apparatus 5165 feeds gas into the body cavity of the patient 5185 through the pneumoperitoneum tube 5133 to inflate the body cavity in order to secure the field of view of the endoscope 5115 and secure the working space for the surgeon. A recorder 5167 is an apparatus capable of recording various kinds of information relating to surgery. A printer 5169 is an apparatus capable of printing various kinds of information relating to surgery in various forms such as a text, an image, or a graph.

In the following, especially a characteristic configuration of the endoscopic surgery system 5113 is described in more detail.

### (Support arm apparatus)

The support arm apparatus 5141 includes the base unit 5143 serving as a base, and the arm unit 5145 extending from the base unit 5143. In the example illustrated, the arm unit 5145 includes the plurality of joint units 5147a, 5147b, and 5147c and the plurality of links 5149a and 5149b connected to each other by the joint unit 5147b. In Fig. 18, for simplified illustration, the configuration of the arm unit 5145 is illustrated in a simplified form. Actually, the shape, number and arrangement of the joint units 5147a to 5147c and the links 5149a and 5149b and the direction and the like of axes of rotation of the joint units 5147a to 5147c can be set suitably such that the arm unit 5145 has a desired degree of freedom. For example, the arm unit 5145 may preferably be included such that it has a degree of freedom equal to or not less than six degrees of freedom. This makes it possible to move the endoscope 5115 freely within the movable range of the arm unit 5145. Consequently, it becomes possible to insert the lens barrel 5117 of the endoscope 5115 from a desired direction into the body cavity of the patient 5185.

An actuator is provided in the joint units 5147a to 5147c, and the joint units 5147a to 5147c are configured to be rotatable about a certain axis in accordance with the driving of the respective actuator. The driving of the actuator is controlled by the arm control apparatus 5159 to control the rotational angle of each of the joint units 5147a to 5147c thereby to control driving of the arm unit 5145. Consequently, control of the position and the posture of the endoscope 5115 can be implemented. At this point, the arm control apparatus 5159 can control driving of the arm unit 5145 by various known controlling methods such as force control or position control.

For example, if the surgeon 5181 suitably performs operation inputting through the input apparatus 5161 (including the foot switch 5171), then driving of the arm unit 5145 may be controlled suitably by the arm control apparatus 5159 in response to the operation input to control the position and the posture of the endoscope 5115. After the endoscope 5115 at the distal end of the arm unit 5145 is moved from an arbitrary position to a different arbitrary position by the control just described, the endoscope 5115 can be supported fixedly at the position after the movement. It is to be noted that the arm unit 5145 may be operated in a master-slave fashion. In this case, the arm unit 5145 may be remotely operated by the user through the input apparatus 5161 which is placed at a place remote from the operating room.

Further, in a case where force control is applied, the arm control apparatus 5159 may perform power-assisted control to drive the actuators of the joint units 5147a to 5147c such that the arm unit 5145 may receive external force by the user and move smoothly following the external force. With this arrangement, when the user moves the arm unit 5145 while touching the arm unit 5145 directly, the arm unit 5145 can be moved with comparatively weak force. Accordingly, it becomes possible for the user to move the endoscope 5115 more intuitively with a simpler and easier operation, and user convenience can be improved.

Here, generally in endoscopic surgery, the endoscope 5115 is supported by a medical doctor called scopist. In contrast, in a case where the support arm apparatus 5141 is used, the position of the endoscope 5115 can be fixed with a higher degree of certainty without hands, and therefore, an image of a surgical region can be obtained stably and surgery can be performed smoothly.

It is to be noted that the arm control apparatus 5159 may not necessarily be provided on the cart 5151. Further, the arm control apparatus 5159 may not necessarily be a single apparatus. For example, the arm control apparatus 5159 may be provided in each of the joint units 5147a to 5147c of the arm unit 5145 of the support arm apparatus 5141 such that a plurality of arm control apparatuses 5159 cooperates with each other to implement driving control of the arm unit 5145.

### (Light Source Apparatus)

The light source apparatus 5157 supplies irradiation light upon imaging of a surgical region to the endoscope 5115. The light source apparatus 5157 includes a white light source which includes, for example, an LED, a laser light source, or a combination of them. In this case, in a case where a white light source includes a combination of red, green, and blue (RGB) laser light sources, since the output intensity and the output timing can be controlled with a high degree of accuracy for each color (each wavelength), adjustment of the white balance of a captured image can be performed by the light source apparatus 5157. Further, in this case, if laser beams from the RGB laser light sources are applied time-divisionally on an observation target and driving of the imaging elements of the camera head 5119 is controlled in synchronism with the irradiation timings, then images individually corresponding to the R, G, and B colors can be captured time-divisionally. According to the method just described, a color image can be obtained even if a color filter is not provided for the imaging element.

Further, driving of the light source apparatus 5157 may be controlled such that the intensity of light to be output is changed for each certain time. By controlling driving of the imaging element of the camera head 5119 in synchronism with the timing of the change of the intensity of light to acquire images time-divisionally and synthesizing the images, an image of a high dynamic range free from underexposed blocked up shadows and overexposed highlights can be created.

Further, the light source apparatus 5157 may be configured to supply light of a certain wavelength band ready for special light observation. In special light observation, for example, by utilizing the wavelength dependency of absorption of light of a body tissue, narrow band light observation (narrow band imaging) of imaging a certain tissue such as a blood vessel of a superficial portion of the mucous membrane or the like in a high contrast is performed by applying light of a narrower wavelength band in comparison with irradiation light upon ordinary observation (namely, white light). Alternatively, in special light observation, fluorescent observation for obtaining an image from fluorescent light generated by irradiation of excitation light may also be performed. In fluorescent observation, it is possible to perform observation of fluorescent light from a body tissue by irradiating the body tissue with excitation light (autofluorescence observation), to obtain a fluorescent light image by locally injecting a reagent such as indocyanine green (ICG) into a body tissue and irradiating the body tissue with excitation light corresponding to a fluorescent light wavelength of the reagent. The light source apparatus 5157 can be configured to supply such narrow-band light and/or excitation light suitable for special light observation as described above.

### (Camera Head and CCU)

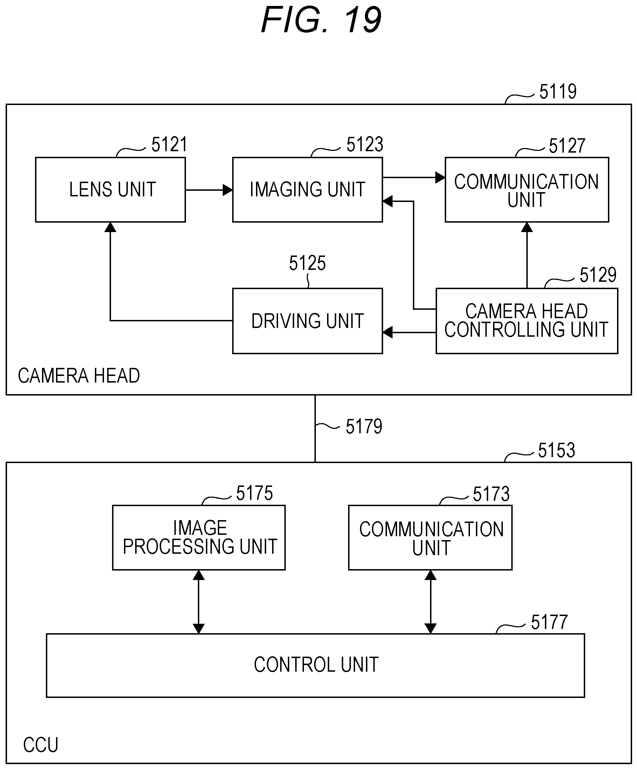

Functions of the camera head 5119 of the endoscope 5115 and the CCU 5153 are described in more detail with reference to Fig. 19. Fig. 19 is a block diagram illustrating an example of a functional configuration of the camera head 5119 and the CCU 5153 illustrated in Fig. 18.

Referring to Fig. 19, the camera head 5119 has, as functions thereof, a lens unit 5121, an imaging unit 5123, a driving unit 5125, a communication unit 5127, and a camera head controlling unit 5129. Further, the CCU 5153 has, as functions thereof, a communication unit 5173, an image processing unit 5175, and a control unit 5177. The camera head 5119 and the CCU 5153 are connected to be bidirectionally communicable to each other by a transmission cable 5179.

First, a functional configuration of the camera head 5119 is described. The lens unit 5121 is an optical system provided at a connecting location of the camera head 5119 to the lens barrel 5117. Observation light taken in from the distal end of the lens barrel 5117 is introduced into the camera head 5119 and enters the lens unit 5121. The lens unit 5121 includes a combination of a plurality of lenses including a zoom lens and a focusing lens. The lens unit 5121 has optical characteristics adjusted such that the observation light is condensed on a light receiving face of the imaging element of the imaging unit 5123. Further, the zoom lens and the focusing lens are configured such that the positions thereof on their optical axis are movable for adjustment of the magnification and the focal point of a captured image.

The imaging unit 5123 includes an imaging element and is disposed at a succeeding stage to the lens unit 5121. Observation light having passed through the lens unit 5121 is condensed on the light receiving face of the imaging element, and an image signal corresponding to the observation image is generated by photoelectric conversion. The image signal generated by the imaging unit 5123 is provided to the communication unit 5127.

As the imaging element which is included in the imaging unit 5123, an image sensor, for example, of the complementary metal oxide semiconductor (CMOS) type is used which has a Bayer array and is capable of capturing an image in color. It is to be noted that, as the imaging element, an imaging element may be used which is ready, for example, for imaging of an image of a high resolution equal to or not less than 4K. If an image of a surgical region is obtained in a high resolution, then the surgeon 5181 can comprehend a state of the surgical region in enhanced details and can proceed with the surgery more smoothly.

Further, the imaging element which is included in the imaging unit 5123 is configured such that it has a pair of imaging elements for acquiring image signals for the right eye and the left eye compatible with 3D display. In a case where 3D display is applied, the surgeon 5181 can comprehend the depth of a living body tissue in the surgical region with a higher degree of accuracy. It is to be noted that, if the imaging unit 5123 is configured as that of the multi-plate type, then a plurality of systems of lens units 5121 is provided corresponding to the individual imaging elements of the imaging unit 5123.

In addition, the imaging unit 5123 may not necessarily be provided on the camera head 5119. For example, the imaging unit 5123 may be provided just behind the objective lens in the inside of the lens barrel 5117.

The driving unit 5125 includes an actuator and moves the zoom lens and the focusing lens of the lens unit 5121 by a certain distance along the optical axis under the control of the camera head controlling unit 5129. Consequently, the magnification and the focal point of a captured image by the imaging unit 5123 can be adjusted suitably.

The communication unit 5127 includes a communication apparatus for transmitting and receiving various kinds of information to and from the CCU 5153. The communication unit 5127 transmits an image signal acquired from the imaging unit 5123 as RAW data to the CCU 5153 through the transmission cable 5179. At this point, in order to display a captured image of a surgical region in low latency, preferably the image signal is transmitted by optical communication. This is because, since, upon surgery, the surgeon 5181 performs surgery while observing the state of an affected area through a captured image, in order to achieve surgery with a higher degree of safety and certainty, it is demanded for a video image of the surgical region to be displayed on the real time basis as far as possible. In a case where optical communication is applied, a photoelectric conversion module for converting an electric signal into an optical signal is provided in the communication unit 5127. After the image signal is converted into an optical signal by the photoelectric conversion module, it is transmitted to the CCU 5153 through the transmission cable 5179.

Further, the communication unit 5127 receives a control signal for controlling driving of the camera head 5119 from the CCU 5153. The control signal includes information regarding imaging conditions such as, for example, information that a frame rate of a captured image is designated, information that an exposure value upon image capturing is designated, and/or information that a magnification and a focal point of a captured image is designated. The communication unit 5127 provides the received control signal to the camera head controlling unit 5129. It is to be noted that also the control signal from the CCU 5153 may be transmitted by optical communication. In this case, a photoelectric conversion module for converting an optical signal into an electric signal is provided in the communication unit 5127. After the control signal is converted into an electric signal by the photoelectric conversion module, it is provided to the camera head controlling unit 5129.

It is to be noted that the imaging conditions such as the frame rate, exposure value, magnification, or focal point are set automatically by the control unit 5177 of the CCU 5153 on the basis of an acquired image signal. In other words, an auto exposure (AE) function, an auto focus (AF) function, and an auto white balance (AWB) function are incorporated in the endoscope 5115.

The camera head controlling unit 5129 controls driving of the camera head 5119 on the basis of a control signal from the CCU 5153 received through the communication unit 5127. For example, the camera head controlling unit 5129 controls driving of the imaging element of the imaging unit 5123 on the basis of information that a frame rate of a captured image is designated and/or information that an exposure value upon image capturing is designated. Further, for example, the camera head controlling unit 5129 controls the driving unit 5125 to suitably move the zoom lens and the focusing lens of the lens unit 5121 on the basis of information that a magnification and a focal point of a captured image are designated. The camera head controlling unit 5129 may further include a function for storing information for identifying of the lens barrel 5117 and/or the camera head 5119.

It is to be noted that, by disposing the components such as the lens unit 5121 and the imaging unit 5123 in a sealed structure having high airtightness and high waterproof, the camera head 5119 can be provided with resistance to an autoclave sterilization process.

Now, a functional configuration of the CCU 5153 is described. The communication unit 5173 includes a communication apparatus for transmitting and receiving various kinds of information to and from the camera head 5119. The communication unit 5173 receives an image signal transmitted thereto from the camera head 5119 through the transmission cable 5179. At this point, the image signal may be transmitted preferably by optical communication as described above. In this case, for the compatibility with optical communication, the communication unit 5173 includes a photoelectric conversion module for converting an optical signal into an electric signal. The communication unit 5173 provides the image signal after conversion into an electric signal to the image processing unit 5175.

Further, the communication unit 5173 transmits, to the camera head 5119, a control signal for controlling driving of the camera head 5119. The control signal also may be transmitted by optical communication.

The image processing unit 5175 performs various image processes for an image signal in the form of RAW data transmitted thereto from the camera head 5119. The image processes include various known signal processes such as, for example, a development process, an image quality improving process (a bandwidth enhancement process, a super-resolution process, a noise reduction (NR) process, and/or an image stabilization process), and/or an enlargement process (electronic zooming process). Further, the image processing unit 5175 performs a detection process for an image signal for performing AE, AF, and AWB.

The image processing unit 5175 includes a processor such as a CPU or a GPU, and when the processor operates in accordance with a certain program, the image processes and the detection process described above can be performed. It is to be noted that, in a case where the image processing unit 5175 includes a plurality of GPUs, the image processing unit 5175 suitably divides information relating to an image signal such that image processes are performed in parallel by the plurality of GPUs.

The control unit 5177 performs various kinds of control relating to image capturing of a surgical region by the endoscope 5115 and display of the captured image. For example, the control unit 5177 generates a control signal for controlling driving of the camera head 5119. At this point, if imaging conditions are input by the user, then the control unit 5177 generates a control signal on the basis of the input by the user. Alternatively, in a case where the endoscope 5115 has an AE function, an AF function, and an AWB function incorporated therein, the control unit 5177 suitably calculates an optimum exposure value, focal distance, and white balance in response to a result of a detection process by the image processing unit 5175 and generates a control signal.

Further, the control unit 5177 controls the display apparatus 5155 to display an image of a surgical region on the basis of an image signal for which the image processes have been performed by the image processing unit 5175. At this point, the control unit 5177 recognizes various objects in the surgical region image using various image recognition technologies. For example, the control unit 5177 can recognize a surgical tool such as forceps, a particular living body region, bleeding, mist when the energy device 5135 is used, and the like by detecting the shape, color, and the like of edges of the objects included in the surgical region image. The control unit 5177 causes, when it controls the display apparatus 5155 to display a surgical region image, various kinds of surgery supporting information to be displayed in an overlapping manner with the image of the surgical region using a result of the recognition. In a case where surgery supporting information is displayed in an overlapping manner and presented to the surgeon 5181, the surgeon 5181 can proceed with the surgery more safety and certainty.

The transmission cable 5179 which connects the camera head 5119 and the CCU 5153 to each other is an electric signal cable ready for communication of an electric signal, an optical fiber ready for optical communication, or a composite cable thereof.

Here, while, in the example illustrated in the figure, communication is performed by wired communication using the transmission cable 5179, the communication between the camera head 5119 and the CCU 5153 may be performed otherwise by wireless communication. In a case where the communication between the camera head 5119 and the CCU 5153 is performed by wireless communication, there is no necessity to lay the transmission cable 5179 in the operating room. Therefore, such a situation that movement of a medical staff in the operating room is disturbed by the transmission cable 5179 can be eliminated.

An example of the operating room system 5100 to which the technology according to the present disclosure can be applied has been described above. It is to be noted here that, although a case in which the medical system to which the operating room system 5100 is applied is the endoscopic surgery system 5113 has been described as an example, the configuration of the operating room system 5100 is not limited to that of the example described above. For example, the operating room system 5100 may be applied to a soft endoscopic system for inspection or a microscopic surgery system in place of the endoscopic surgery system 5113.

The technology according to the present disclosure can be suitably applied to the audiovisual controller 5107 among the configurations described above. The application of the technology according to the present disclosure to the audiovisual controller 5107 enables the plurality of cameras in the operating room system 5100 to be synchronized in time with high accuracy.

### <3. Summary>

According to the embodiments of the present disclosure, in a multicamera system including a plurality of camera control devices and a plurality of cameras that is communicably connected to an external device (e.g., a personal computer) via the plurality of camera control devices, it is possible to synchronize time with high accuracy between the plurality of camera control devices and the plurality of cameras, as described above.

Further, according to the embodiments of the present disclosure, in a multicamera system including a plurality of camera control devices and a plurality of cameras that is communicably connected to an external device via the plurality of camera control devices, it is possible to efficiently save images captured by the cameras by batch in the external device, for example, without causing overlap of file names.

Moreover, according to the embodiments of the present disclosure, in a multicamera system including a plurality of camera control devices and a plurality of cameras that is communicably connected to an external device via the plurality of camera control devices, it is possible to save images captured at the same time by batch in an external device.

The preferred embodiments of the present disclosure have been described above with reference to the accompanying drawings, but the technical scope of the present disclosure is not limited to the above examples. It is obvious that a person having ordinary knowledge in the technical scope of the present disclosure may find various alterations and modifications within the scope of the technical idea described in the appended claims, and it should be understood that they will naturally come under the technical scope of the present disclosure.

For example, in the multicamera system indicated in the above embodiments, a configuration in which the camera control devices 110 and the cameras 114 are integrated may be adopted.

Further, the effects described in the present specification are merely illustrative or exemplified effects, and are not limitative. That is, with or in the place of the above effects, the technology according to the present disclosure may achieve other effects that are clear to those skilled in the art from the description of the present specification.

Additionally, the following configurations also belong to the technical scope of the present disclosure.
(1) A data transmission system including:
   a plurality of image capturing devices;
   a plurality of control devices each configured to control a different one of the image capturing devices; and
   an information processing device configured to communicate with the control devices,
   in which, on the basis of a predetermined rule, the information processing device obtains, from the control devices, content obtained by the image capturing devices at a timing in accordance with the rule.
(2) The data transmission system according to (1), in which the predetermined rule is to obtain content that is obtained most recently.
(3) The data transmission system according to (1), in which the predetermined rule is to obtain content with a file name to which information about a date and time of image capturing has been added.
(4) The data transmission system according to (3), in which the control devices add the information about the date and time of image capturing to a file name.
(5) The data transmission system according to (1), in which the predetermined rule is to obtain content with a file name to which an optional identifier has been added.
(6) The data transmission system according to (5), in which the control devices add the optional identifier to a file name.
(7) The data transmission system according to (1), in which the predetermined rule is to obtain content that is obtained at a same timing as a timing at which content is obtained from one of the image capturing devices, from the image capturing devices other than the one of the image capturing devices.
(8) The data transmission system according to (7), in which the predetermined rule is to obtain content that is obtained at a same date and time as a date and time when content is obtained from one of the image capturing devices, from the image capturing devices other than the one of the image capturing devices.
(9) The data transmission system according to (7), in which the predetermined rule is to obtain content included in a same group as a series of groups including content obtained from one of the image capturing devices, from the image capturing devices other than the one of the image capturing devices.
(10) The data transmission system according to (9), in which the series of groups includes content obtained through continuous image capturing.
(11) The data transmission system according to any one of (7) to (10), in which one of the control devices that is connected to the one of the image capturing devices operates as a master control device, and the control devices other than the one of the control devices each operate as a client control device.
(12) The data transmission system according to (1), in which the predetermined rule is to obtain content to which information about an optional identifier specified at time of an image capture instruction from the information processing device has been added.
(13) The data transmission system according to (12), in which the image capturing devices add the information about the optional identifier to content.
(14) The data transmission system according to (12), in which the control devices add the information about the optional identifier to content.
(15) The data transmission system according to any one of (1) to (14), in which the plurality of image capturing devices performs synchronized image capturing.
(16) The data transmission system according to (15), in which the plurality of image capturing devices generates content with a same timecode by the synchronized image capturing.
(17) The data transmission system according to any one of (1) to (16), in which the content includes a video image.
(18) The data transmission system according to any one of (1) to (17), in which the content is transmitted through wired communication.
(19) The data transmission system according to any one of (1) to (18), in which one of the control devices operates as a master control device and the control devices other than the one of the control devices each operate as a client control device, and
   the master control device instructs the client control devices to send content to the information processing device on the basis of the predetermined rule.
(20) A data transmission method in a data transmission system including
   a plurality of image capturing devices,
   a plurality of control devices each configured to control a different one of the image capturing devices, and
   an information processing device configured to communicate with the control devices, the method including:
      causing the information processing device to obtain, on the basis of a predetermined rule, content obtained by the image capturing devices at a timing in accordance with the rule, from the control devices.
(21) A computer program used for a system including
   a plurality of image capturing devices,
   a plurality of control devices each configured to control a different one of the image capturing devices, and
   an information processing device configured to communicate with the control devices,
   the program including: causing the information processing device to obtain, on the basis of a predetermined rule, content obtained by the image capturing devices at a timing in accordance with the rule, from the control devices.

### REFERENCE SIGNS LIST

- 102: External device
- 110: Camera control device
- 114: Camera

## Claims

1. A data transmission system comprising:
a plurality of image capturing devices;
a plurality of control devices each configured to control a different one of the image capturing devices; and
an information processing device configured to communicate with the control devices,
wherein, on a basis of a predetermined rule, the information processing device obtains, from the control devices, content obtained by the image capturing devices at a timing in accordance with the rule.

2. The data transmission system according to claim 1, wherein the predetermined rule is to obtain content that is obtained most recently.

3. The data transmission system according to claim 1, wherein the predetermined rule is to obtain content with a file name to which information about a date and time of image capturing has been added.

4. The data transmission system according to claim 3, wherein the control devices add the information about the date and time of image capturing to a file name.

5. The data transmission system according to claim 1, wherein the predetermined rule is to obtain content with a file name to which an optional identifier has been added.

6. The data transmission system according to claim 5, wherein the control devices add the optional identifier to a file name.

7. The data transmission system according to claim 1, wherein the predetermined rule is to obtain content that is obtained at a same timing as a timing at which content is obtained from one of the image capturing devices, from the image capturing devices other than the one of the image capturing devices.

8. The data transmission system according to claim 7, wherein the predetermined rule is to obtain content that is obtained at a same date and time as a date and time when content is obtained from one of the image capturing devices, from the image capturing devices other than the one of the image capturing devices.

9. The data transmission system according to claim 7, wherein the predetermined rule is to obtain content included in a same group as a series of groups including content obtained from one of the image capturing devices, from the image capturing devices other than the one of the image capturing devices.

10. The data transmission system according to claim 9, wherein the series of groups includes content obtained through continuous image capturing.

11. The data transmission system according to claim 7, wherein one of the control devices that is connected to the one of the image capturing devices operates as a master control device, and the control devices other than the one of the control devices each operate as a client control device.

12. The data transmission system according to claim 1, wherein the predetermined rule is to obtain content to which information about an optional identifier specified at time of an image capture instruction from the information processing device has been added.

13. The data transmission system according to claim 12, wherein the image capturing devices add the information about the optional identifier to content.

14. The data transmission system according to claim 12, wherein the control devices add the information about the optional identifier to content.

15. The data transmission system according to claim 1, wherein the plurality of image capturing devices performs synchronized image capturing.

16. The data transmission system according to claim 15, wherein the plurality of image capturing devices generates content with a same timecode by the synchronized image capturing.

17. The data transmission system according to claim 1, wherein the content includes a video image.

18. The data transmission system according to claim 1, wherein the content is transmitted through wired communication.

19. The data transmission system according to claim 1,
wherein one of the control devices operates as a master control device and the control devices other than the one of the control devices each operate as a client control device, and
the master control device instructs the client control devices to send content to the information processing device on a basis of the predetermined rule.

20. A data transmission method in a data transmission system including
a plurality of image capturing devices,
a plurality of control devices each configured to control a different one of the image capturing devices, and
an information processing device configured to communicate with the control devices, the method comprising:
causing the information processing device to obtain, on a basis of a predetermined rule, content obtained by the image capturing devices at a timing in accordance with the rule, from the control devices.

21. A computer program used for a system including
a plurality of image capturing devices,
a plurality of control devices each configured to control a different one of the image capturing devices, and
an information processing device configured to communicate with the control devices,
the program comprising: causing the information processing device to obtain, on a basis of a predetermined rule, content obtained by the image capturing devices at a timing in accordance with the rule, from the control devices.
